# EUROPEAN PATENT SPECIFICATION

(11) **EP 4 158 460 B1**
(45) Date of publication and mention of the grant of the patent: **20.05.2026**
(21) Application number: 21735053.7
(22) Date of filing: 28.05.2021
(51) Int. Cl.: G06F 3/0482, H04M 1/72436, G06F 3/0484, G06F 3/0488, G06F 3/0489, H04L 51/046

(54) **USER INTERFACES FOR TRANSITIONING BETWEEN SELECTION MODES**
BENUTZERSCHNITTSTELLEN ZUM ÜBERGANG ZWISCHEN AUSWAHLMODI
INTERFACES UTILISATEUR POUR EFFECTUER UNE TRANSITION ENTRE DES MODES DE SÉLECTION

(30) Priority: 01.06.2020 US 202063033125 P
(43) Date of publication of application: 05.04.2023
(73) Proprietor: Apple Inc., Cupertino CA 95014 (US)
(72) Inventor: FULLERTON, Michael Wilson, Cupertino, California 95014 (US); LOTTERMOSER, Stephen Michael, Cupertino, California 95014 (US)
(74) Representative: Zacco Denmark A/S
(86) International application number: PCT/US2021/035028
(87) International publication number: WO 2021/247446

(56) References cited:
- WO-A1-2017/201326

## Description

### CROSS-REFERENCE TO RELATED APPLICATIONS

This application claims the benefit of U.S. Provisional Application No. 63/033,125, filed June 1, 2020.

### FIELD OF THE DISCLOSURE

This specification relates generally to electronic devices that select content in various selection modes, and user interactions with such devices.

### BACKGROUND

User interaction with electronic devices has increased significantly in recent years. These devices can be devices such as computers, tablet computers, televisions, multimedia devices, mobile devices, and the like. In some circumstances, users wish to use electronic devices to select content for further action.

WO 2017/201326 A1 discloses a method of text selection in a messaging application.

### SUMMARY

Some embodiments described in this disclosure are directed to ways of providing for efficient selection of partial and/or full message content in a user interface displaying representations of messages. Enhancing these interactions improves the user's experience with the device and decreases user interaction time, which is particularly important where input devices are battery-operated.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

### BRIEF DESCRIPTION OF THE DRAWINGS

For a better understanding of the various described embodiments, reference should be made to the Detailed Description below, in conjunction with the following drawings in which like reference numerals refer to corresponding parts throughout the figures.
Fig. 1A is a block diagram illustrating a portable multifunction device with a touch-sensitive display in accordance with some embodiments.
Fig. 1B is a block diagram illustrating exemplary components for event handling in accordance with some embodiments.
Fig. 2 illustrates a portable multifunction device having a touch screen in accordance with some embodiments.
Fig. 3 is a block diagram of an exemplary multifunction device with a display and a touch-sensitive surface in accordance with some embodiments.
Fig. 4A illustrates an exemplary user interface for a menu of applications on a portable multifunction device in accordance with some embodiments.
Fig. 4B illustrates an exemplary user interface for a multifunction device with a touch-sensitive surface that is separate from the display in accordance with some embodiments.
Fig. 5A illustrates a personal electronic device in accordance with some embodiments.
Fig. 5B is a block diagram illustrating a personal electronic device in accordance with some embodiments.
Figs. 5C-5D illustrate exemplary components of a personal electronic device having a touch-sensitive display and intensity sensors in accordance with some embodiments.
Figs. 5E-5H illustrate exemplary components and user interfaces of a personal electronic device in accordance with some embodiments.
Figs. 6A-6R illustrate exemplary ways in which an electronic device provides for efficient selection of partial and/or full message content according to some embodiments.
Figs. 7A-7B are flow diagrams illustrating a method of providing for efficient selection of partial and/or full message content in accordance with some embodiments of the disclosure.

### DETAILED DESCRIPTION

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

In some implementations, an example electronic device presents content in a user interface, such as representations of messages including messaging content in a messages user interface. In some implementations, an example electronic device provides efficient ways of selecting parts of messages and/or full messages. Such techniques can reduce the cognitive burden on a user who uses an example electronic device. Further, these techniques can reduce processor and battery power otherwise wasted on redundant user inputs.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component. The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

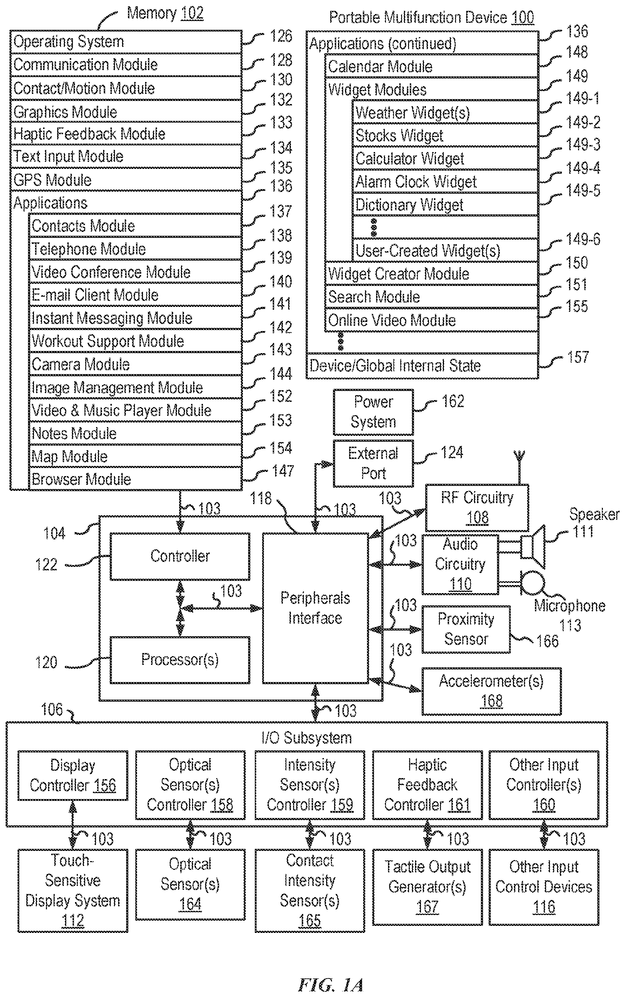

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

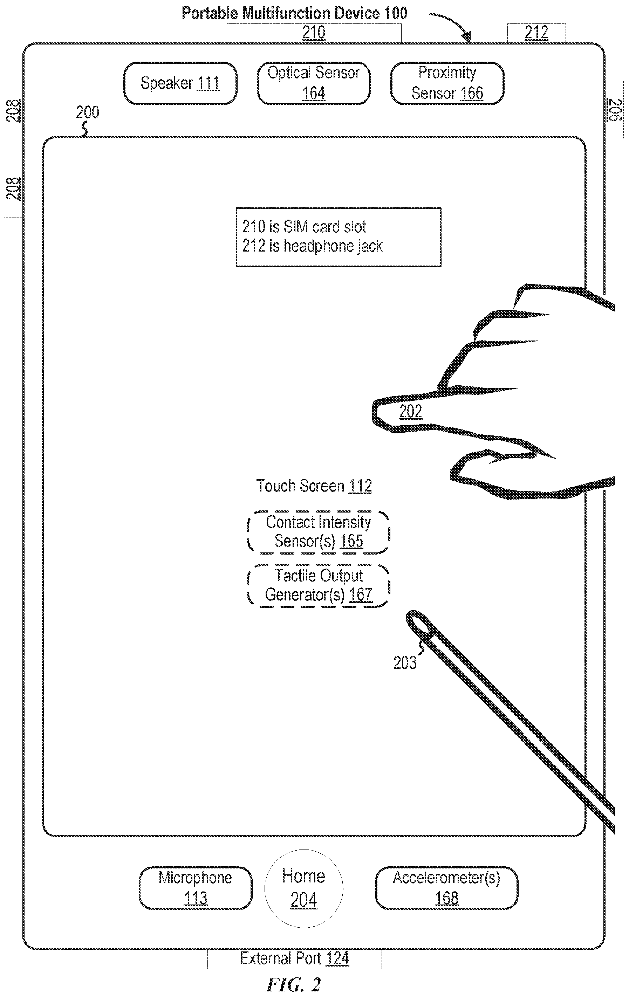

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures) as input. In some embodiments, the one or more input devices are integrated with the computer system. In some embodiments, the one or more input devices are separate from the computer system.

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals". In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer". In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

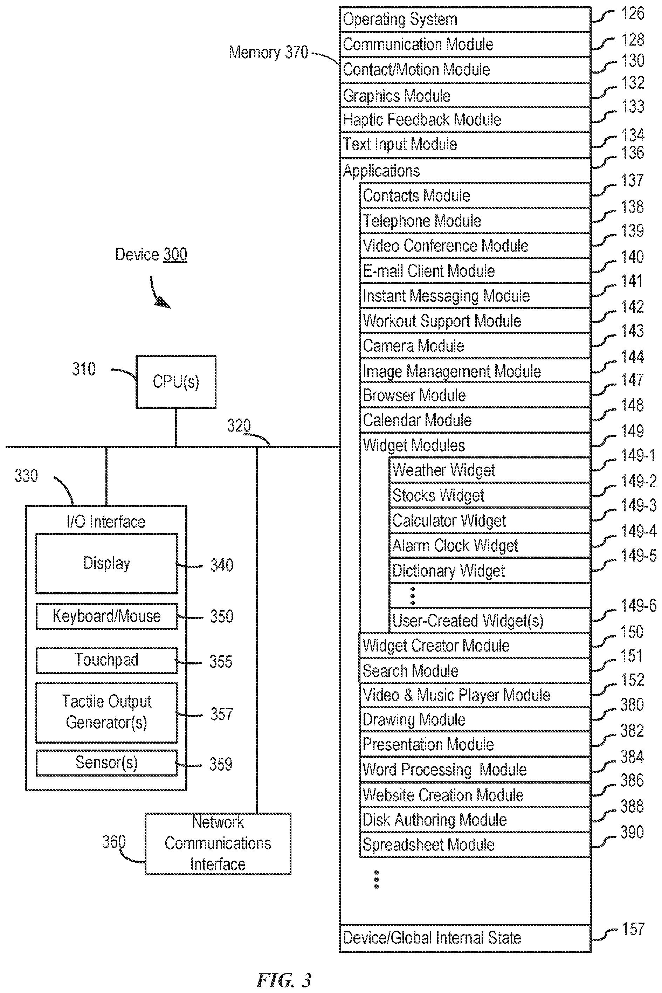

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments, memory 102 (FIG. 1A) or 370 (FIG. 3) stores device/global internal state 157, as shown in FIGS. 1A and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing; to camera 143 as picture/video metadata; and to applications that provide location-based services such as weather widgets, local yellow page widgets, and map/navigation widgets).

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference module 139, e-mail 140, or IM 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

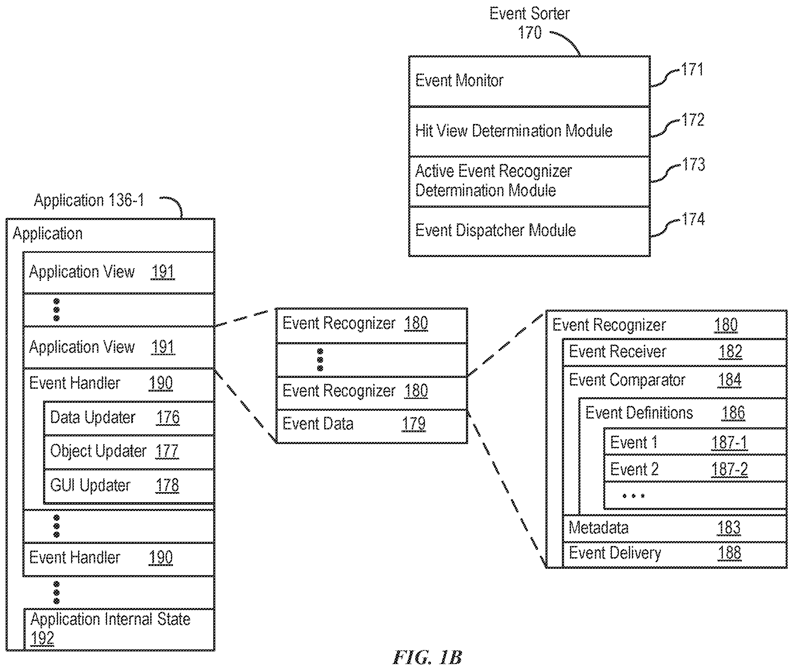

FIG. 1B is a block diagram illustrating exemplary components for event handling in accordance with some embodiments. In some embodiments, memory 102 (FIG. 1A) or 370 (FIG. 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (187) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3 is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3 is, optionally, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Attention is now directed towards embodiments of user interfaces that are, optionally, implemented on, for example, portable multifunction device 100.

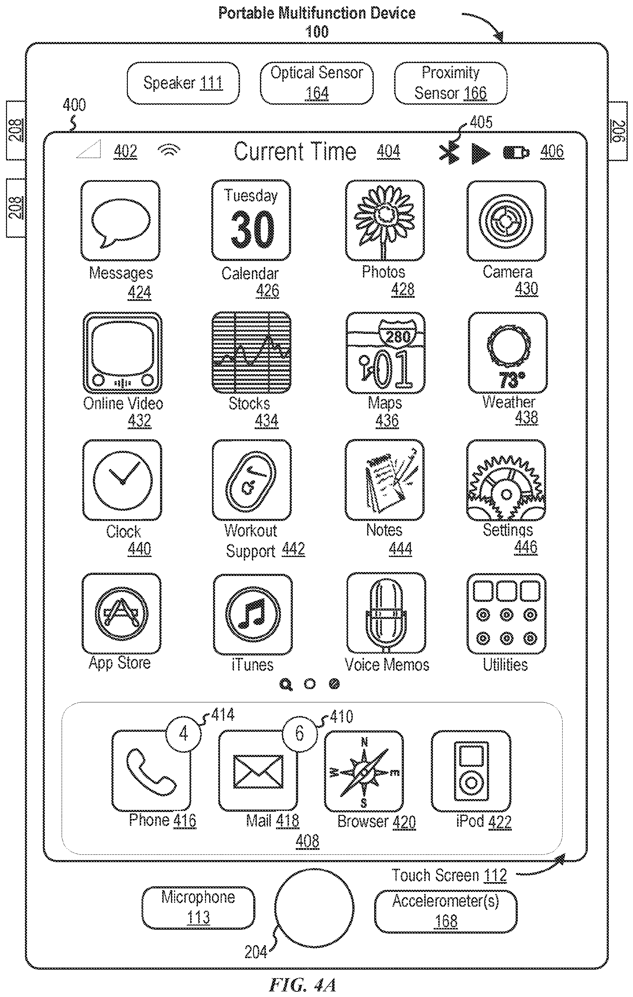

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ∘ Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Maps;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

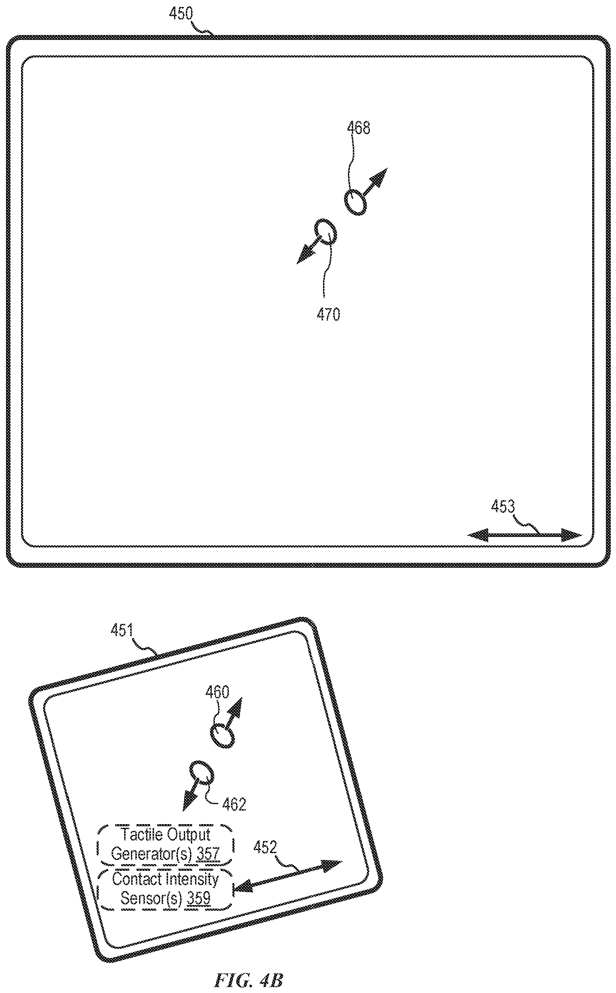

FIG. 4B illustrates an exemplary user interface on a device (e.g., device 300, FIG. 3) with a touch-sensitive surface 451 (e.g., a tablet or touchpad 355, FIG. 3) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

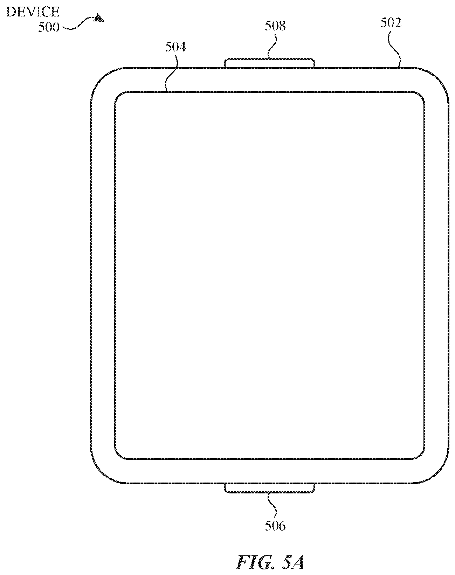

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

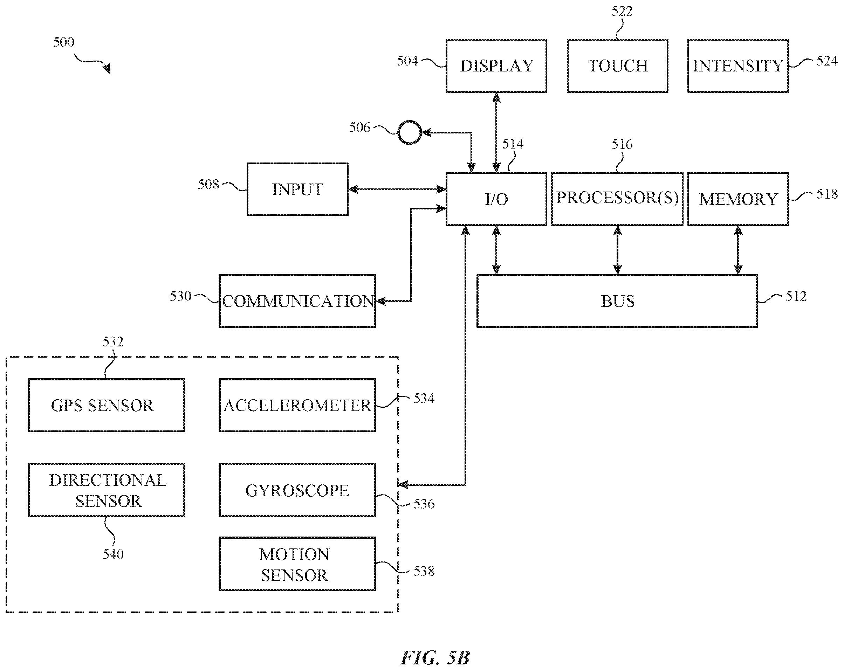

FIG. 5B depicts exemplary personal electronic device 500. In some embodiments, device 500 can include some or all of the components described with respect to FIGS. 1A, 1B, and 3. Device 500 has bus 512 that operatively couples I/O section 514 with one or more computer processors 516 and memory 518. I/O section 514 can be connected to display 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

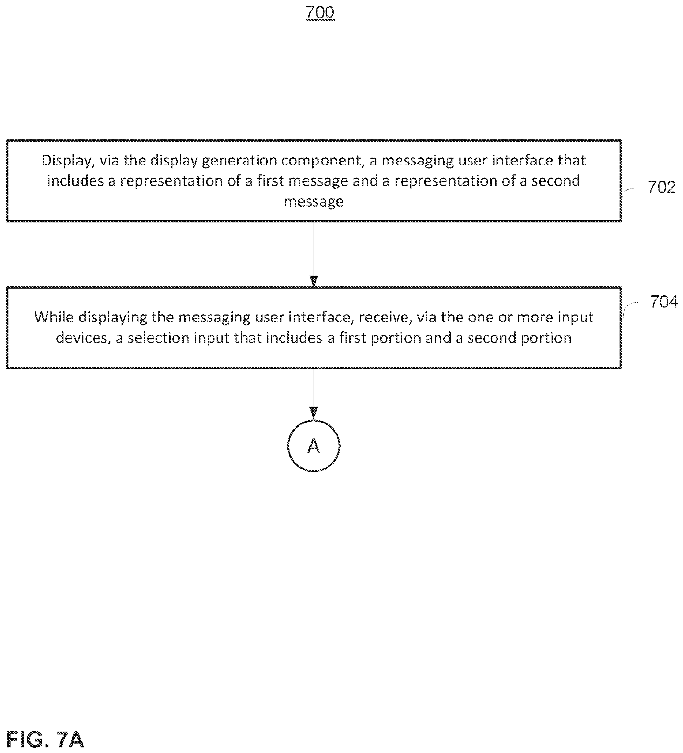

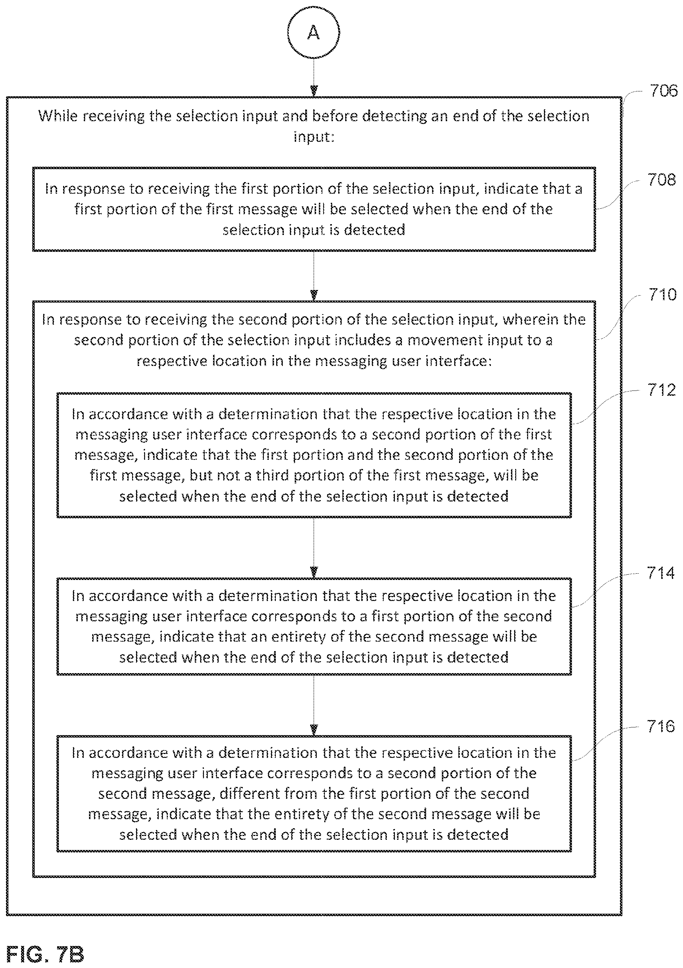

Memory 518 of personal electronic device 500 can include one or more non-transitory computer-readable storage mediums, for storing computer-executable instructions, which, when executed by one or more computer processors 516, for example, can cause the computer processors to perform the techniques described below, including process 700 (Figs. 7A-7B). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3 or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

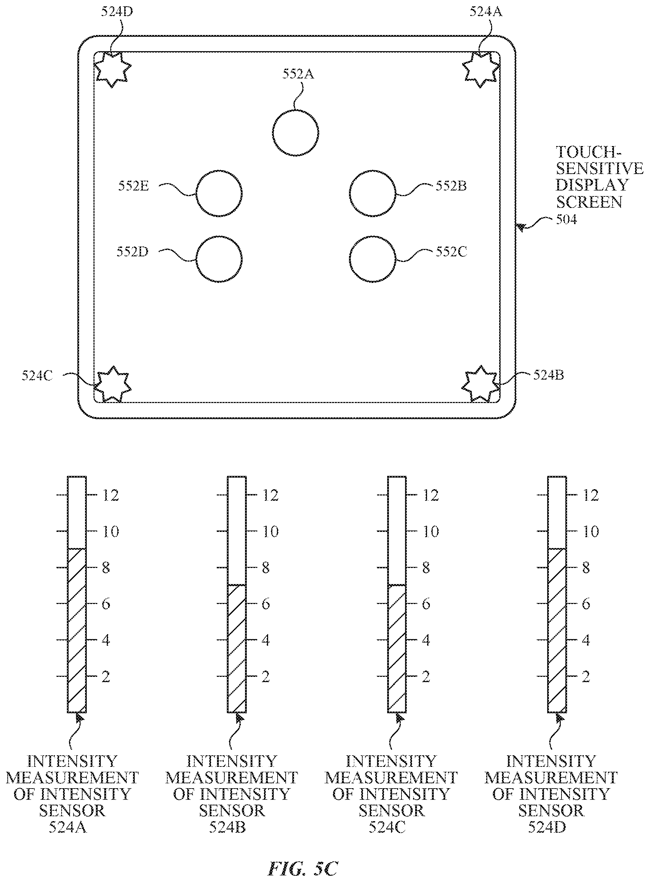

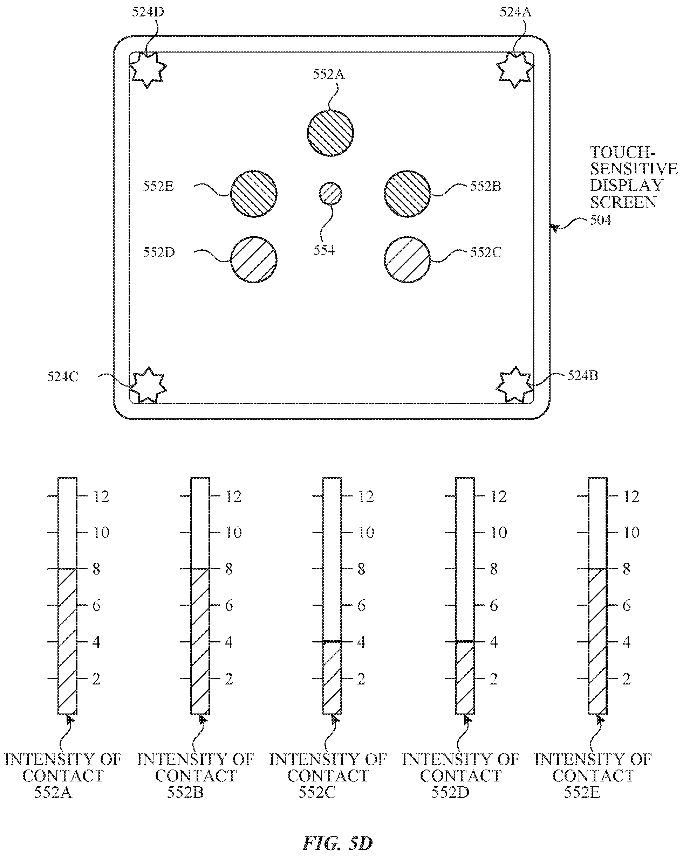

FIG. 5C illustrates detecting a plurality of contacts 552A-552E on touch-sensitive display screen 504 with a plurality of intensity sensors 524A-524D. FIG. 5C additionally includes intensity diagrams that show the current intensity measurements of the intensity sensors 524A-524D relative to units of intensity. In this example, the intensity measurements of intensity sensors 524A and 524D are each 9 units of intensity, and the intensity measurements of intensity sensors 524B and 524C are each 7 units of intensity. In some implementations, an aggregate intensity is the sum of the intensity measurements of the plurality of intensity sensors 524A-524D, which in this example is 32 intensity units. In some embodiments, each contact is assigned a respective intensity that is a portion of the aggregate intensity. FIG. 5D illustrates assigning the aggregate intensity to contacts 552A-552E based on their distance from the center of force 554. In this example, each of contacts 552A, 552B, and 552E are assigned an intensity of contact of 8 intensity units of the aggregate intensity, and each of contacts 552C and 552D are assigned an intensity of contact of 4 intensity units of the aggregate intensity. More generally, in some implementations, each contact j is assigned a respective intensity Ij that is a portion of the aggregate intensity, A, in accordance with a predefined mathematical function, Ij = A·(Dj/ΣDi), where Dj is the distance of the respective contact j to the center of force, and ΣDi is the sum of the distances of all the respective contacts (e.g., i=1 to last) to the center of force. The operations described with reference to FIGS. 5C-5D can be performed using an electronic device similar or identical to device 100, 300, or 500. In some embodiments, a characteristic intensity of a contact is based on one or more intensities of the contact. In some embodiments, the intensity sensors are used to determine a single characteristic intensity (e.g., a single characteristic intensity of a single contact). It should be noted that the intensity diagrams are not part of a displayed user interface, but are included in FIGS. 5C-5D to aid the reader.

In some embodiments, a portion of a gesture is identified for purposes of determining a characteristic intensity. For example, a touch-sensitive surface optionally receives a continuous swipe contact transitioning from a start location and reaching an end location, at which point the intensity of the contact increases. In this example, the characteristic intensity of the contact at the end location is, optionally, based on only a portion of the continuous swipe contact, and not the entire swipe contact (e.g., only the portion of the swipe contact at the end location). In some embodiments, a smoothing algorithm is, optionally, applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is, optionally, characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

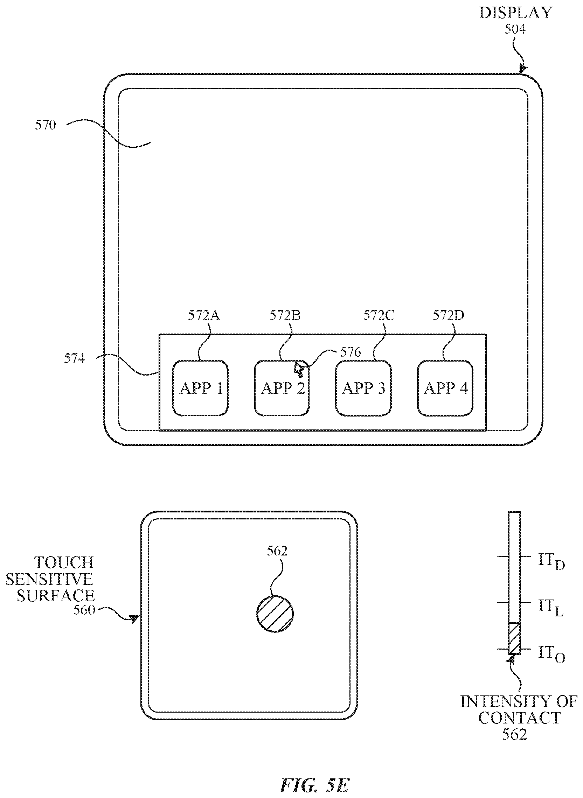

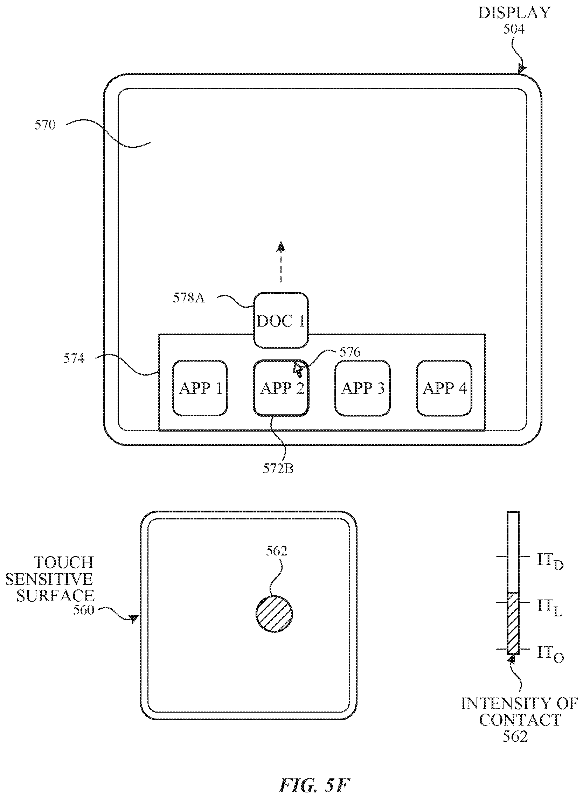

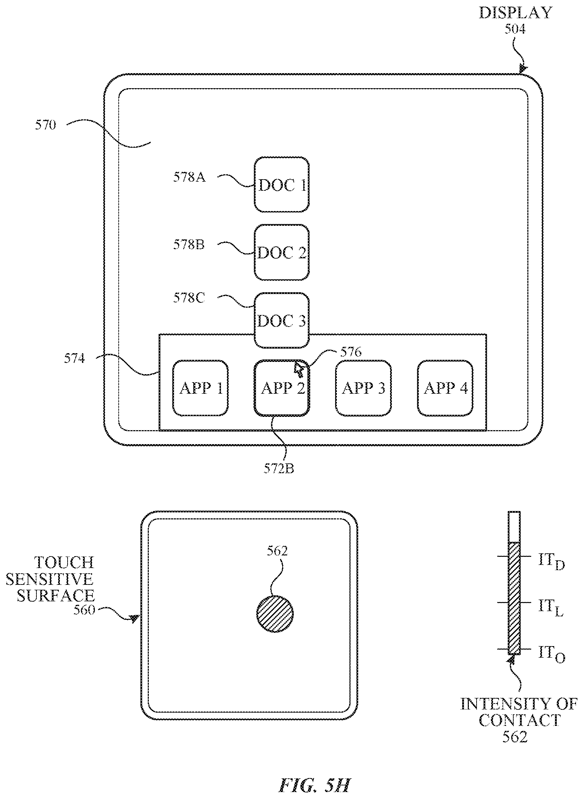

FIGS. 5E-5H illustrate detection of a gesture that includes a press input that corresponds to an increase in intensity of a contact 562 from an intensity below a light press intensity threshold (e.g., "IT_{L}") in FIG. 5E, to an intensity above a deep press intensity threshold (e.g., "IT_{D}") in FIG. 5H. The gesture performed with contact 562 is detected on touch-sensitive surface 560 while cursor 576 is displayed over application icon 572B corresponding to App 2, on a displayed user interface 570 that includes application icons 572A-572D displayed in predefined region 574. In some embodiments, the gesture is detected on touch-sensitive display 504. The intensity sensors detect the intensity of contacts on touch-sensitive surface 560. The device determines that the intensity of contact 562 peaked above the deep press intensity threshold (e.g., "IT_{D}"). Contact 562 is maintained on touch-sensitive surface 560. In response to the detection of the gesture, and in accordance with contact 562 having an intensity that goes above the deep press intensity threshold (e.g., "IT_{D}") during the gesture, reduced-scale representations 578A-578C (e.g., thumbnails) of recently opened documents for App 2 are displayed, as shown in FIGS. 5F-5H. In some embodiments, the intensity, which is compared to the one or more intensity thresholds, is the characteristic intensity of a contact. It should be noted that the intensity diagram for contact 562 is not part of a displayed user interface, but is included in FIGS. 5E-5H to aid the reader.

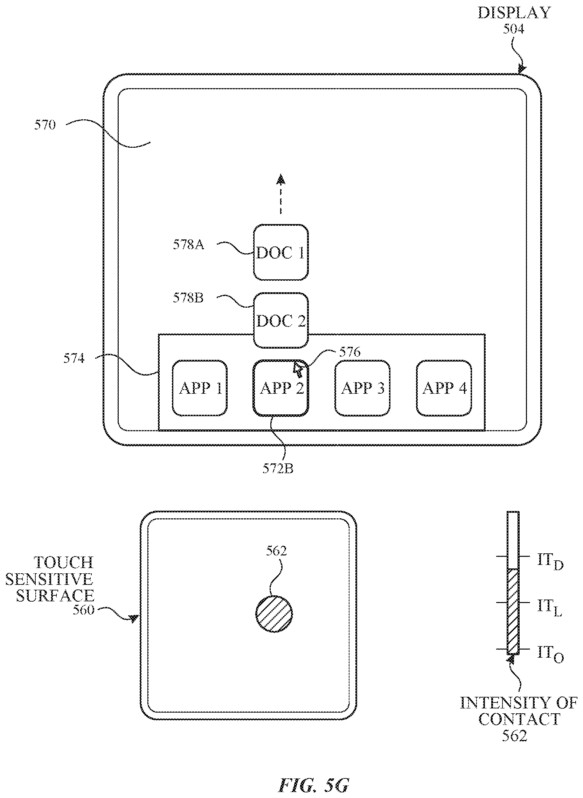

In some embodiments, the display of representations 578A-578C includes an animation. For example, representation 578A is initially displayed in proximity of application icon 572B, as shown in FIG. 5F. As the animation proceeds, representation 578A moves upward and representation 578B is displayed in proximity of application icon 572B, as shown in FIG. 5G. Then, representations 578A moves upward, 578B moves upward toward representation 578A, and representation 578C is displayed in proximity of application icon 572B, as shown in FIG. 5H. Representations 578A-578C form an array above icon 572B. In some embodiments, the animation progresses in accordance with an intensity of contact 562, as shown in FIGS. 5F-5G, where the representations 578A-578C appear and move upwards as the intensity of contact 562 increases toward the deep press intensity threshold (e.g., "IT_{D}"). In some embodiments, the intensity, on which the progress of the animation is based, is the characteristic intensity of the contact. The operations described with reference to FIGS. 5E-5H can be performed using an electronic device similar or identical to device 100, 300, or 500.

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

As used herein, an "installed application" refers to a software application that has been downloaded onto an electronic device (e.g., devices 100, 300, and/or 500) and is ready to be launched (e.g., become opened) on the device. In some embodiments, a downloaded application becomes an installed application by way of an installation program that extracts program portions from a downloaded package and integrates the extracted portions with the operating system of the computer system.

As used herein, the terms "open application" or "executing application" refer to a software application with retained state information (e.g., as part of device/global internal state 157 and/or application internal state 192). An open or executing application is, optionally, any one of the following types of applications:
- an active application, which is currently displayed on a display screen of the device that the application is being used on;
- a background application (or background processes), which is not currently displayed, but one or more processes for the application are being processed by one or more processors; and
- a suspended or hibernated application, which is not running, but has state information that is stored in memory (volatile and non-volatile, respectively) and that can be used to resume execution of the application.

As used herein, the term "closed application" refers to software applications without retained state information (e.g., state information for closed applications is not stored in a memory of the device). Accordingly, closing an application includes stopping and/or removing application processes for the application and removing state information for the application from the memory of the device. Generally, opening a second application while in a first application does not close the first application. When the second application is displayed and the first application ceases to be displayed, the first application becomes a background application.

Attention is now directed towards embodiments of user interfaces ("UI") and associated processes that are implemented on an electronic device, such as portable multifunction device 100, device 300, or device 500.

### USER INTERFACES AND ASSOCIATED PROCESSES

### User Interfaces for Facilitating Partial and Full Selection of Content

Users interact with electronic devices in many different manners, including using devices for sending and/or receiving messages. In some embodiments, those electronic devices display messaging user interfaces in which sent and/or received messages are displayed. In some circumstances, a user interacting with such a messaging user interface on an electronic device may wish to select content from such sent and/or received messages for further action (e.g., copying, pasting, etc.). The embodiments described below provide ways in which an electronic device provides for efficient selection of partial and/or full message content for further action. Enhancing interactions with a device reduces the amount of time needed by a user to perform operations, and thus reduces the power usage of the device and increases battery life for battery-powered devices. It is understood that people use devices. When a person uses a device, that person is optionally referred to as a user of the device.

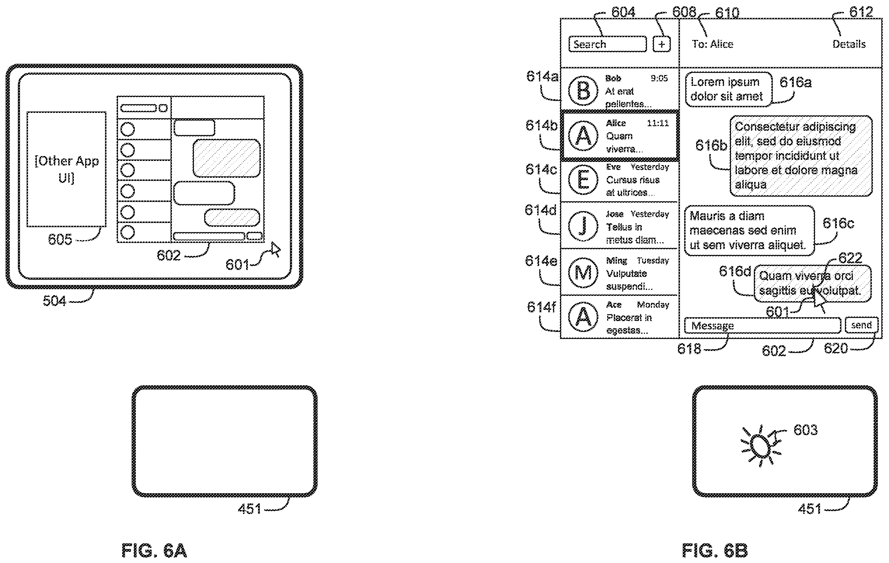

Figs. 6A-6R illustrate exemplary ways in which an electronic device provides for efficient selection of partial and/or full message content according to some embodiments. The embodiments in these figures are used to illustrate the processes described below, including the processes described with reference to Figs. 7A-7B. Although Figs. 6A-6R illustrate various examples of ways an electronic device is able to perform the processes described below with reference to Figs. 7A-7B, it should be understood that these examples are not meant to be limiting, and the electronic device is able to perform one or more processes described below with reference to Figs. 7A-7B in ways not expressly described with reference to Figs. 6A-6R.

Fig. 6A illustrates an exemplary messaging user interface 602 displayed by a device (e.g., device 500 described with reference to Figs. 1-5). In some embodiments, user interface 602 is displayed, by the device, via a display generation component (e.g., "display 504"). In some embodiments, the display generation component is a hardware component (e.g., including electrical components) capable of receiving display data and displaying a user interface. In some embodiments, examples of a display generation component include a touch screen display, a monitor, a television, a projector, an integrated, discrete, or external display device, or any other suitable display device. In Fig. 6A, the electronic device is optionally also in communication with a touch-sensitive surface 451 (e.g., a touchpad), which optionally controls a cursor 601 displayed on display 504. While Fig. 6A illustrates touch-sensitive surface 451 as being separate from display 504, it is understood that the embodiments described herein can also be implemented with electronic devices including a touch screen or other display/input configurations. In some embodiments, rather than a cursor, the position of an input is defined by, for example, the position of a user's finger (e.g., on the touch screen), or other quantity relevant to the display/input configurations used.

The example illustrated in Fig. 6A is a desktop user interface and the messaging application is optionally one of multiple applications currently being displayed within the desktop. For example, the electronic device also displays a user interface 605 for another application. In some embodiments, the messaging user interface described herein is displayed by a smartphone, media player, or tablet that displays one user interface for one application at time. For example, a smartphone can display the messaging user interface as a full screen user interface without concurrently displaying a user interface for another application. In some embodiments, one or more other applications run in the background of the smartphone, though the smartphone does not display the user interfaces of these applications. As another example, in some embodiments, the messaging user interface is displayed by a tablet that displays one or more user interfaces at a time, including the messaging user interface. As illustrated in FIG. 6A, user interface 602 includes multiple messages by at least two users. This user interface 602 is described in more detail in FIG. 6B.

Fig. 6B illustrates an exemplary detailed view of messaging user interface 602 shown in FIG. 6A. Figs. 6B-6D illustrated the selection of a portion of content of a single message. Although Figs. 6B-6R illustrate the user interface 602 without illustrating the display generation component 504 and the user interface 605 of the other application, it should be understood that the examples described below with reference to Figs. 6B-6R can be presented in the way illustrated in Fig. 6A. As described above, in some embodiments, the user interface 602 can be displayed in a different manner, such as on a smartphone or media player that displays one user interface at a time or on a tablet that displays one or more user interfaces at a time. Messaging user interface 602 is optionally a user interface of a messaging application installed on the electronic device. The messaging application/user interface 602 optionally facilitates the sending and/or receiving of electronic messages (e.g., text messages, rich electronic messages, etc.) from the electronic device 500 to other user accounts (e.g., user accounts other than those of device 500)/electronic devices and/or from other user accounts/electronic devices to the electronic device 500.

Referring to Fig. 6B, messaging user interface 602 optionally includes representations 614 (e.g., 614a, 614b, etc.) of various messaging conversations with other electronic devices, a search field 604 for searching the content of the messages in the messaging user interface 602, and a selectable option 608 that is selectable to compose a new message and/or start a new conversation with another electronic device. In Fig. 6B, representation 614b is currently selected (e.g., indicated by the bold highlighting around representation 614b). As a result, the content of the messaging conversation corresponding to representation 614b (e.g., messaging conversation with Alice) is displayed on the right side of the messaging user interface 602. The right side of user interface 602 in Fig. 6B includes an indication 610 of the participants of the currently selected messaging conversation (e.g., Alice), and a selectable option 612 that is selectable to view additional details related to the participants of the currently selected messaging conversation. Additionally, the right side of user interface 602 in Fig. 6B includes a certain number of representations of messages 616 (e.g., 616a, 616b, etc.) included in the conversation (e.g., the number of partial and/or full representations of messages that will fit in the current view of user interface 602), a text entry field 618 for composing additional messages to add to the conversation, and a selectable option 620 to send/transmit those composed messages to the conversation.

In some embodiments, the representation of a given message includes a container (e.g., a message bubble) within which the content of the message (e.g., text) is displayed. For example, representation 616a in Fig. 6B includes a message bubble that contains the text content of the message to which it corresponds (e.g., "Lorem ipsum dolor sit amet"). In some embodiments, representations of messages 616 provided to the conversation by the present electronic device 500 (e.g., the device that is displaying user interface 602) are displayed on/towards one side of the user interface 602 (e.g., right side, such as representations 616b and 616d), and representations of messages 616 provided to the conversation by other electronic devices (e.g., other than device 500) are displayed on/towards the other side of the user interface 602 (e.g., left side, such as representations 616a and 616c). In some embodiments, representations of messages 616 displayed on/towards different sides of user interface 602 are also displayed with different visual characteristics, such as different container (e.g., message bubble) colors, different text colors, etc.

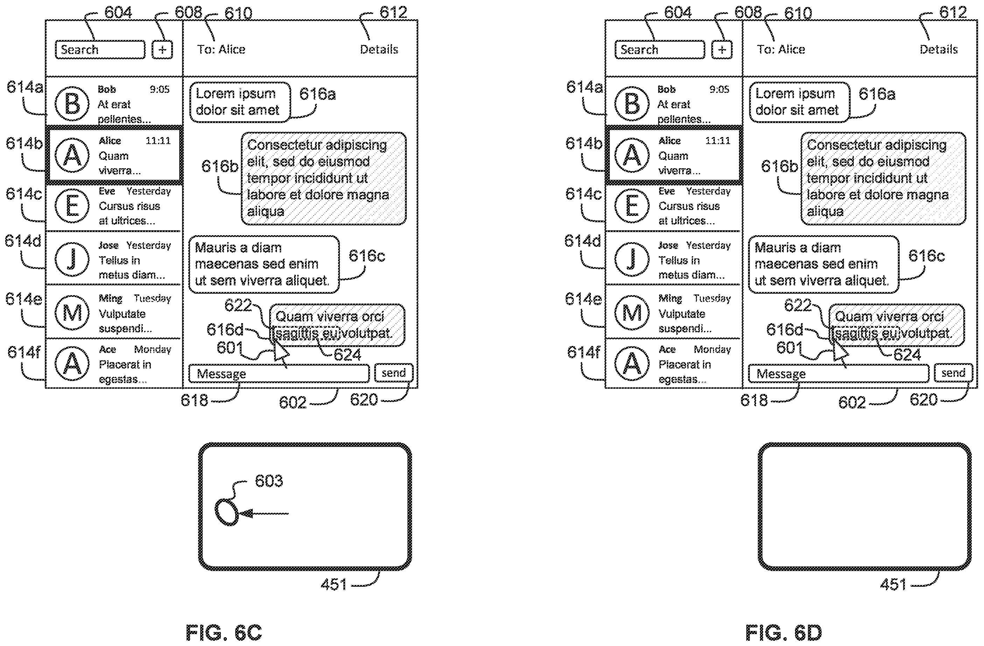

As mentioned previously, in some embodiments, a user interacting with messaging user interface 602 may wish to select content from one or more messages in the messaging conversation (e.g., for further action, such as copying the content for later pasting of the content, etc.). The embodiments described herein provide for various ways of efficiently selecting partial/full message content in a messaging conversation. For example, in Fig. 6B, while cursor 601 is displayed at location 622 within representation 616d, the device detects a click (e.g., via contact 603) on touch-sensitive surface 451, and while the click is held, a leftward movement of contact 603 on touch-sensitive surface, as shown in Fig. 6C. In response, and before detecting the end of the selection input (e.g., liftoff of contact 603 from touch-sensitive surface 451), the electronic device moves the cursor 601 to a new location 622 within representation 616d in accordance with the movement of contact 603 on touch-sensitive surface 451, and highlights (e.g., with highlight indicator 624) the portion of text within representation 616d across which cursor 601 moved based on the movement of contact 603, as shown in Fig. 6C. Highlight indicator 624 optionally indicates what portion(s) of message(s) will be selected when the end of the selection input is detected. Also as shown in Fig. 6C, in some embodiments, the highlighting of part of the content of representation 616d is represented by highlighting that part of the content (e.g., with highlight indicator 624) without changing an appearance of other content within the message (or other messages) or the appearance of the container (e.g., bubble) within which the message is displayed, as a whole. In some embodiments, highlight indicator 624 is a (e.g., at least partially transparent) user interface element displayed overlaid on the content that will be selected and/or any other manner of displaying the content that will be selected differently from the content that will not be selected when the selection input ends (e.g., different typeface, different font, different color, different size).

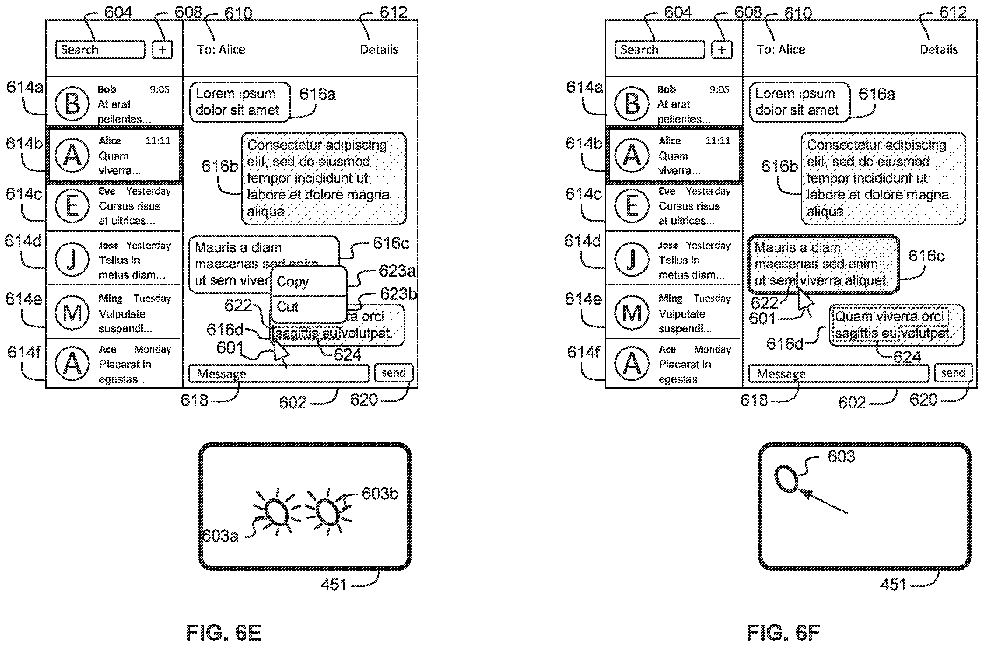

In Fig. 6D, the electronic device detects liftoff of the contact 603 from the touch-sensitive surface 451, and the portion of the message of representation 616d that was highlighted in Fig. 6C becomes selected/remains highlighted (e.g., for further action). In Fig. 6E, while cursor 601 is located over (e.g., near) the selected portion of the message (e.g., corresponding to highlight indicator 624), the electronic device detects user input (e.g., separate from and/or after contact 603, such as a two-contact click (e.g., via contacts 603a and 603b) or a right click input) on touch-sensitive surface 451. In response, the electronic device optionally displays a contextual menu for performing one or more actions on the selected portion of the message. For example, in Fig. 6E, the contextual menu includes a selectable option 623a that is selectable to copy the portion of the message that is selected, and a selectable option 623b that is selectable to cut (e.g., copy and delete) the portion of the message that is selected. A subsequent input for pasting the copied/cut portion of the message will optionally cause the electronic device to paste the copied/cut portion of the message into a target content entry region. In some embodiments, the liftoff of contact 603 causes the contextual menu to be displayed, instead of in response to detecting the user input (e.g., the two-contact click).

. In some embodiments, an input to select content from more than one message causes the selection mode of the electronic device to switch from a partial message selection mode (e.g., in which portion(s) of a single message are selected) (e.g., in which selection is character by character) to a full message selection mode (e.g., in which the entirety of a message is selected) (e.g., in which selection is message by message such that character-by-character selection is not available(e.g., content less than an entire message cannot be selected), as will now be described. For example, if the electronic device detects the input in Fig. 6B, followed by movement of contact 603 upwards and leftwards as shown in Fig. 6F that causes cursor 601 to move from within representation 616d to location 622 within representation 616c, and before the electronic device detects liftoff of contact 603 from the touch-sensitive surface 451, the electronic device optionally switches to a full message selection mode. In some embodiments, in the full message selection mode, the electronic device indicates that the entirety of the message into which cursor 601 moves during the selection input will be selected upon detecting the end of the selection input, regardless of the location within that message to which cursor 601 has moved. For example, in Fig. 6F, cursor 601 has moved from within representation 616d (in Fig. 6B) to location 622 within representation 616c (in Fig. 6F) during a selection input. In response, the electronic device optionally indicates that the entirety of the content of representation 616c will be selected upon detecting the end of the selection input, even though cursor 601 has only moved to location 622 between the words "sem" and "viverra." In some embodiments, when the entirety of the content of a given representation is indicated as being selected, subsequent actions (e.g., copy, paste, etc.) apply to the entirety of the content of the given representation. Further, in some embodiments, the electronic device indicates the selection of the entirety of the content of a given representation by modifying the appearance of the container (e.g., bubble) containing that content, rather than displaying a highlighting indicator that spans the entirety of the content of that container (e.g., rather than highlighting each character individually). For example, in Fig. 6F, the electronic device has modified the appearance (e.g., color, shading, transparency, size, etc.) of the message bubble of representation 616c to indicate that all of the message content of that representation will be selected when the selection input ends (e.g., liftoff of contact 603), rather than displaying a highlighting indicator that spans across all of the message content of representation 616c. In some embodiments, however, the electronic device instead displays a highlight indicator that spans across all of the message content of representation 616c, rather than modifying the appearance of the message bubble of representation 616c. In the manner described above, the electronic device is able to provide an efficient way of selecting the entirety of messages in a messaging conversation, without requiring detection of a separate input for transitioning to the full message selection mode (e.g., separate from the selection input itself that spans multiple messages).

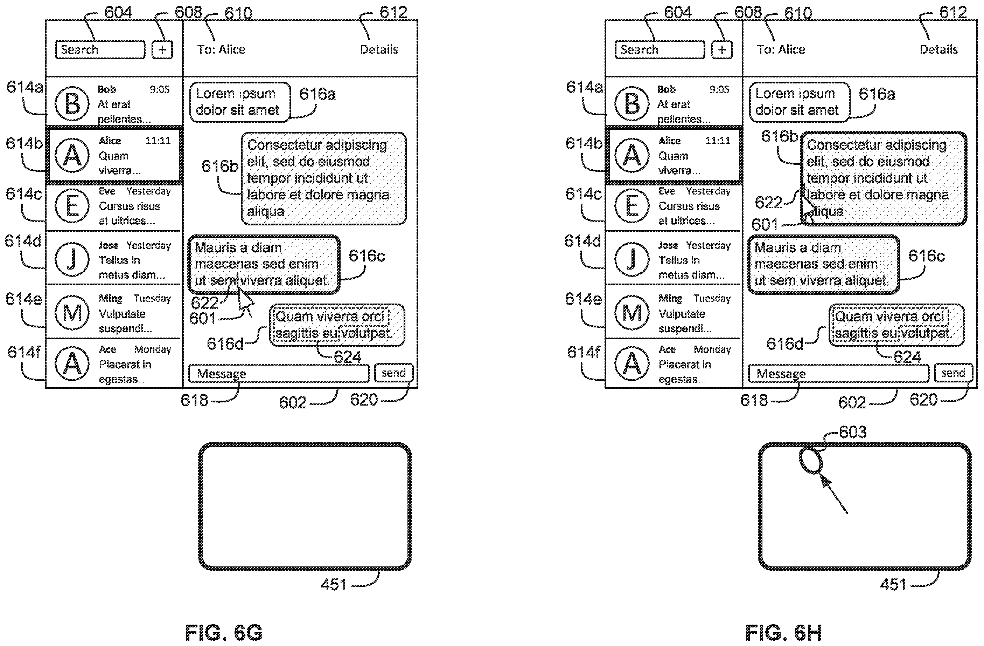

In some embodiments, the message in which cursor 601 was located when the selection input started (e.g., as in Fig. 6B) remains partially selected even though the cursor has moved into another message during the selection input. For example, in Fig. 6F, the portion of the message of representation 616d designated by highlight indicator 624 will be selected when the selection input ends, which optionally is not the entirety of the message of representation 616d. In some embodiments, the portion of the message of representation 616d that is designated as selected is the portion of the message between the location at which cursor 601 was located when the selection input started (e.g., as in Fig. 6B) and the location within representation 616c at which cursor 601 is located in Fig. 6F. In some embodiments, the electronic device does not change the appearance of the container (e.g., bubble) of representation 616d in Fig. 6F, but rather indicates the portion of the message designated as selected with highlight indicator 624, as described previously. In Fig. 6G, the electronic device detects liftoff of the contact 603 from the touch-sensitive surface 451, and the portion of the message of representation 616d that was highlighted in Fig. 6F, and the entirety of the message of representation 616c for which the container appearance was modified, become selected/remain highlighted (e.g., for further action). In some embodiments, the appearance of the container of representation 616c, and the appearance of the highlighting of the portion of the message of representation 616d, remain the same from Fig. 6F to Fig. 6G.

The selection of additional messages optionally proceeds according to the full selection mode described above. For example, in Fig. 6H, instead of detecting the liftoff of contact 603 in Fig. 6G, the electronic device detects, during the selection input (e.g., before detecting liftoff of contact 603), additional upwards leftwards movement of contact 603 on touch-sensitive surface 451 (e.g., from Fig. 6F). In response, the electronic device moves the cursor to a location 622 within the message of representation 616b, as shown in Fig. 6H. As a result, the electronic device optionally indicates that the entirety of the messages of representations 616b and 616c, and a portion of the message of representation 616d (e.g., the portion highlighted by highlight indicator 624), will be selected in response to detecting the end of the selection input. In some embodiments, the entirety of the message of representation 616b will be selected in response to detecting the end of the selection input regardless of the location of cursor 601 within representation 616b (e.g., just as described with reference to representation 616c). Further, the electronic device optionally indicates that the entirety of the message of representation 616b will be selected by changing the appearance of the container (e.g., bubble) of representation 616b. In some embodiments, the appearance of the container of representation 616b is different from the appearance of the container of representation 616c (e.g., different colors, different shadings, etc.), even though both as indicated as entirely selected, because their corresponding messages were optionally provided to the messaging conversation by different electronic devices. In some embodiments, the electronic device indicates that the entirety of the message of representation 616b will be selected by displaying a highlight indicator across the entire content of representation 616b rather than changing the appearance of the container of representation 616b.

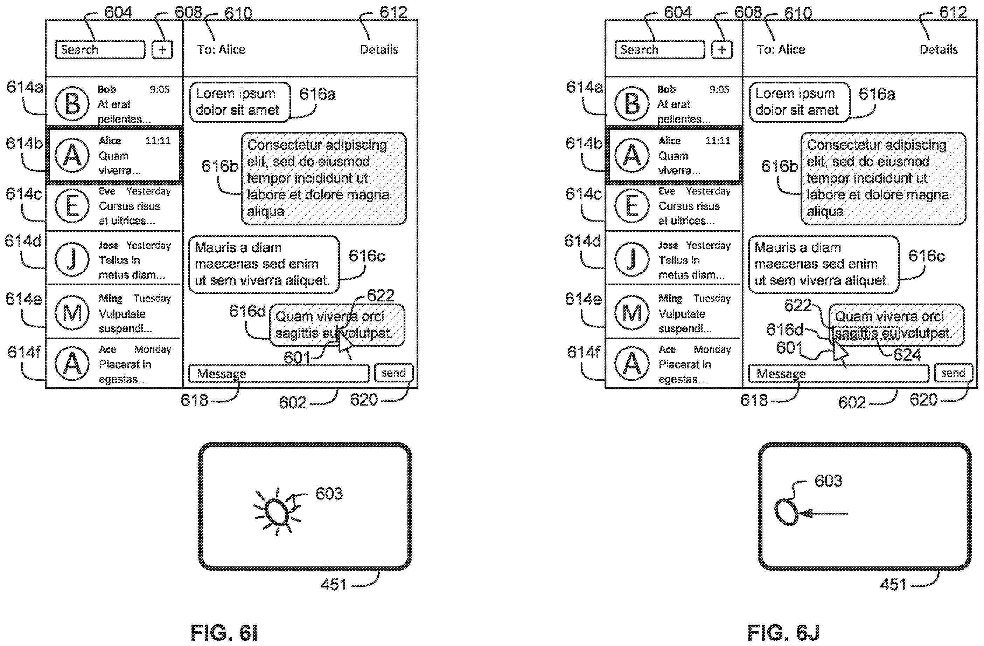

In some embodiments, upon detecting a selection input that spans multiple messages, the electronic device also performs full message selection for the original message (e.g., the message in which the selection input started), rather than performing partial message selection for that original message (e.g., as in Figs. 6B-6H). For example, in Figs. 6I-6K, the electronic device detects the same selection input as in Figs. 6B-6C and 6F, and during the selection input, indicates that the entirety of the message of representation 616d will be selected upon detecting the end of the selection input. This response is optionally different from the response in Figs. 6B-6H in which only part of the message of representation 616d was indicated as being selected. As before, the electronic device optionally indicates that the entirety of the message of representation 616d will be selected by changing the appearance of the container (e.g., bubble) of representation 616d. In some embodiments, the electronic device instead indicates that the entirety of the message of representation 616d will be selected by displaying a highlight indicator across the entire content of representation 616d rather than changing the appearance of the container of representation 616d.

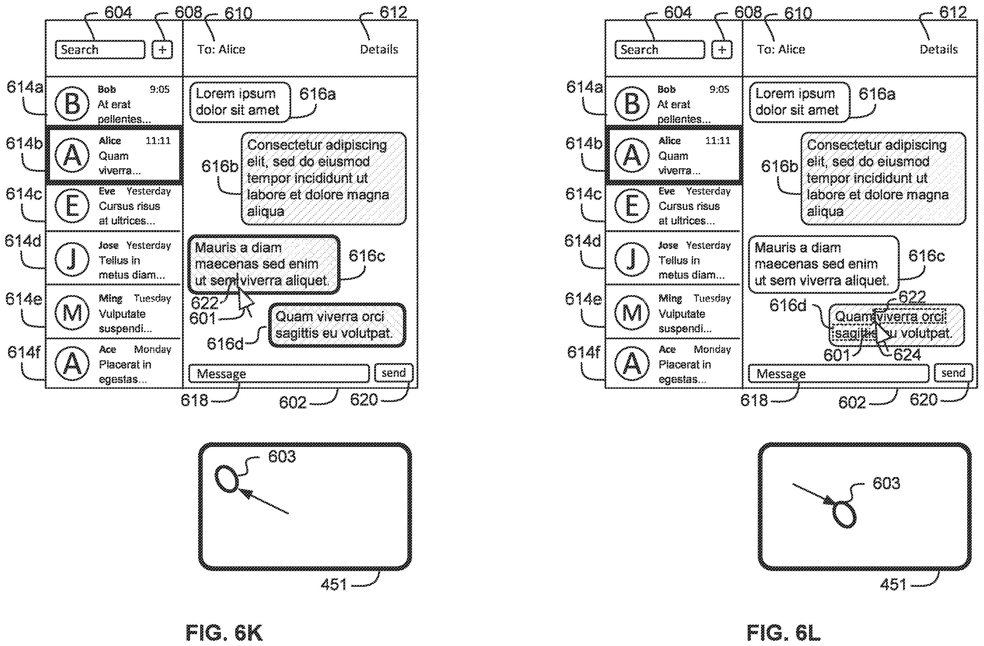

In some embodiments, in response to the selection input moving back to within a single message (e.g., designating content of a single message to be selected), the electronic device transitions back to a partial message selection mode. For example, in Fig. 6L, during the same selection input of Fig. 6K and after the movement of contact 603 detected in Fig. 6K, the electronic device detects movement of contact 603 on touch-sensitive surface downwards and rightwards to cause cursor 601 to move back to a position 622 within representation 616d, as shown in Fig. 6L. In response, the electronic device no longer indicates that the entirety of the message of representation 616d will be selected upon detecting the end of the selection input. Instead, in some embodiments, the electronic device indicates, with highlight indicator 624, that a portion of the message of representation 616d will be selected upon detecting the end of the selection input (e.g., the portion between the original position of cursor 601 in Fig. 6I, and the position of cursor 601 in Fig. 6L).

In some embodiments, a selection mode for user input is changed based on a direction (e.g., up or down in a timeline of the messages in a conversation) of movement of the user input. For example, when the selection mode for a user input is in a full selection mode (as described above) based on the user input moving in a first direction (e.g., the user input moved in the first direction, causing the user input to move outside of a single message and into a second message different from where the user input began), the selection mode is changed from the full selection mode to the partial selection mode when the user input moves a predetermined amount of distance (e.g., non-zero amount of distance) in a second direction different from the first direction (e.g., opposite of the first direction) (e.g., down). Such an embodiment allows the selection mode for the user input to switch back to the partial selection mode within the second message by changing the direction of the user input (such as from the first direction (e.g., the direction that caused the selection mode to change from the partial selection mode to the full selection mode) to the second direction). In some embodiments, after changing from the full selection mode to the partial selection mode within the second message, the selection mode for the user input is changed from the partial selection mode to the full selection mode when the user input moves outside of the second message and into a third message (e.g., different from the first message and the second message) (e.g., by moving in the first direction), similar to as described above when moving outside of the single message.

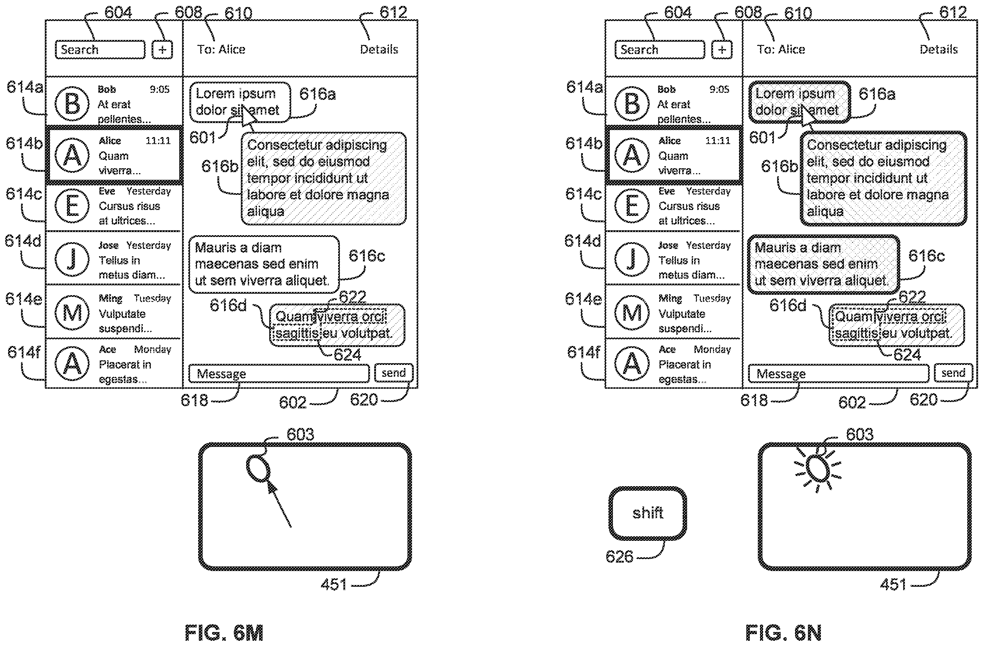

In some embodiments, a selection input other than a movement-based selection input also causes selection of full and/or partial messages in accordance with the embodiments described above. For example, in Fig. 6M, the electronic device has already detected a first selection input (e.g., the end of the first selection input) that has caused a portion of the message of representation 616d to be selected (e.g., the portion indicated by highlight indicator 624). In Fig. 6M, after the first selection input, the electronic device detects upwards leftwards movement of contact 603 on touch-sensitive surface 451, and in response, moves cursor 601 to be displayed within representation 616a while the portion of the message of representation 616d remains selected (e.g., indicated by highlight indicator 624). In Fig. 6N, while cursor 601 is located within representation 616a and the portion of the message of representation 616d is selected, the electronic device detects a click input (e.g., via contact 603) on touch-sensitive surface 451 while, for example, the shift key 626 on a keyboard (e.g., physical or virtual keyboard) is depressed. In some embodiments, a different key on a keyboard or other additional input (e.g., in addition to the click input on touch-sensitive surface 451) is detected instead.

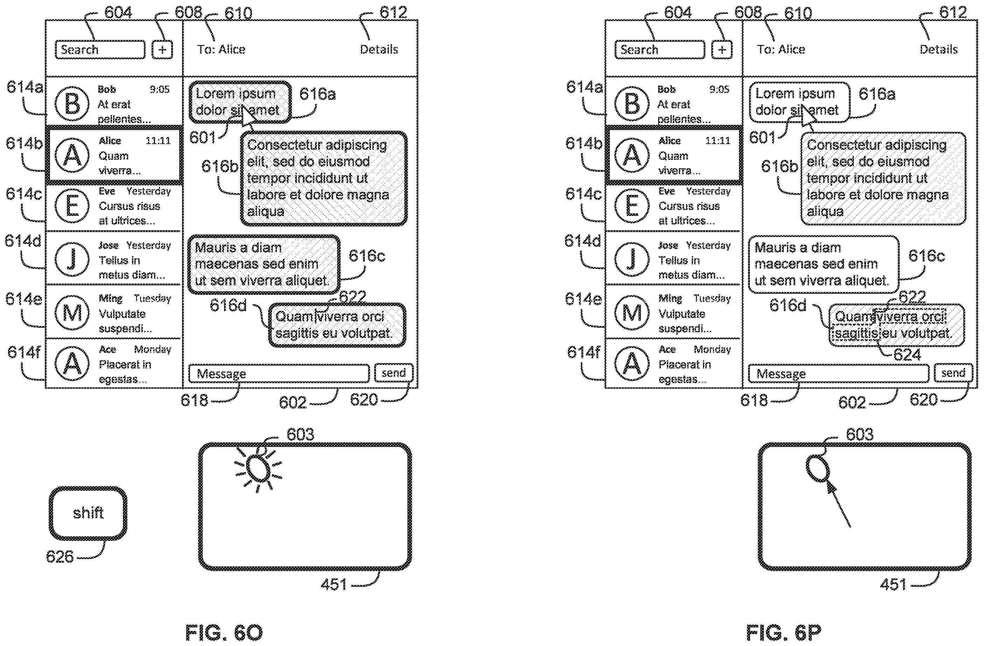

In response to the input detected in Fig. 6N, the electronic device optionally indicates that the entirety of all messages between the message of representation 616d and the message of representation 616a, and the entirety of the message of representation 616a, will be selected upon detecting the end of the selection input (e.g., liftoff of contact 603 after the click)-for example, by changing the appearance of the message containers or displaying highlight indicators that span the entirety of the messages, as previously described. In some embodiments, the electronic device responds as described with reference to Fig. 6N regardless of where cursor 601 is located within representation 616a. In the embodiment of Fig. 6N, the electronic device has maintained partial selection of the message of representation 616d (e.g., similar to as described with reference to Fig. 6F), however to additionally include the portion of the message of representation 616d that is located between the portion of the message of representation 616d that was previously selected in Fig. 6M, and representation 616a (e.g., without including the "eu volutpat" portion of the message that was not previously selected in Fig. 6M). In the embodiment of Fig. 6O, the electronic device instead changes to full selection of the message of representation 616d (e.g., similar to as described with reference to Fig. 6K) in response to the inputs detected in Figs. 6M and 6O. Although Figs. 6N and 6O illustrate indicating full selection of messages (e.g., representations 616a, 616b, and 616c in both Figs. 6N and 6O and also representation 616d in Fig. 6O) by changing the styling of the containers of the representations themselves, in some embodiments, the electronic device 500 instead indicates full selection of the messages by highlighting all of the content of the representations while maintaining the appearance of the containers.

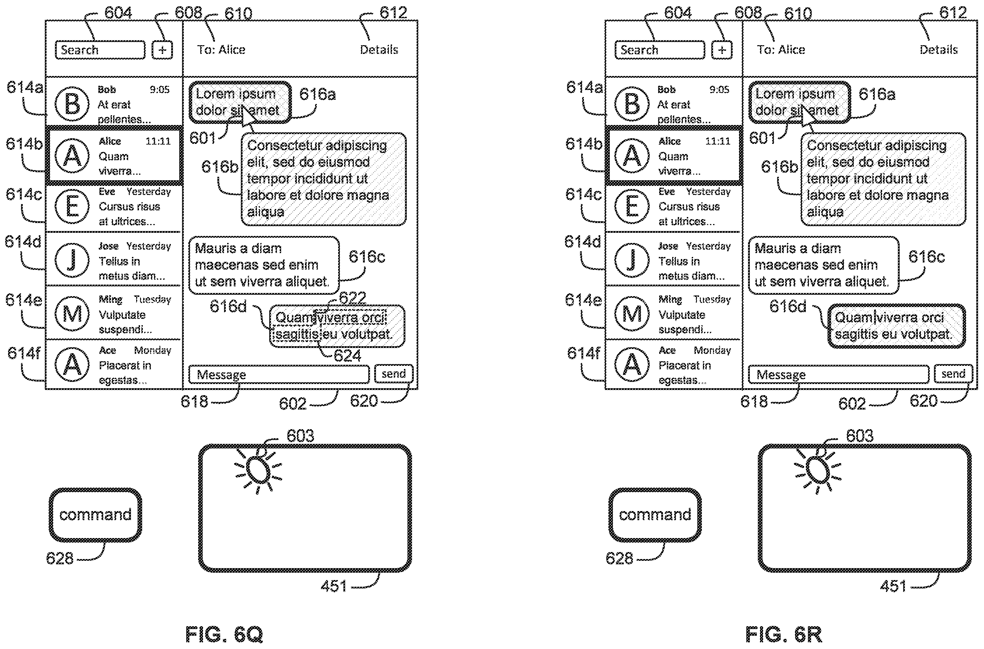

In some embodiments, the electronic device responds similarly in response to a non-movement based selection input to select the content of the original message and one additional message (without selecting the messages between those two messages). For example, in Fig. 6P, the electronic device has already detected a first selection input (e.g., the end of the first selection input) that has caused a portion of the message of representation 616d to be selected (e.g., the portion indicated by highlight indicator 624). In Fig. 6P, after the first selection input, the electronic device detects upwards leftwards movement of contact 603 on touch-sensitive surface 451, and in response, moves cursor 601 to be displayed within representation 616a while the portion of the message of representation 616d remains selected (e.g., indicated by highlight indicator 624). In Fig. 6Q, while cursor 601 is located within representation 616a and the portion of the message of representation 616d is selected, the electronic device detects a click input (e.g., via contact 603) on touch-sensitive surface 451 while, for example, the command key 628 on a keyboard (e.g., physical or virtual keyboard) is depressed. In some embodiments, a different key on a keyboard or other additional input (e.g., in addition to the click input on touch-sensitive surface 451) is detected instead (e.g., different from the key or additional input of Figs. 6N-6O).

In response to the input detected in Fig. 6Q, the electronic device optionally indicates that the entirety of the message of representation 616a (e.g., and not the messages between the message of representation 616d and the message of representation 616a) will be selected upon detecting the end of the selection input (e.g., liftoff of contact 603 after the click)-for example, by changing the appearance of the message container of representation 616a or displaying a highlight indicator in representation 616a that spans the entirety of the message, as previously described. In some embodiments, the electronic device responds as described with reference to Fig. 6Q regardless of where cursor 601 is located within representation 616a. In the embodiment of Fig. 6Q, the electronic device has maintained partial selection of the message of representation 616d (e.g., similar to as described with reference to Fig. 6F), without additionally including in the selection the portion of the message of representation 616d that is located between the portion of the message of representation 616d that was previously selected in Fig. 6P, and representation 616a (e.g., also without including the "eu volutpat" portion of the message that was not previously selected in Fig. 6P). In the embodiment of Fig. 6R, the electronic device instead changes to full selection of the message of representation 616d (e.g., similar to as described with reference to Fig. 6K) in response to the inputs detected in Figs. 6P and 6R. Although Figs. 6Q and 6R illustrate indicating full selection of messages (e.g., representation 616a in both Figs. 6Q and 6R and also representation 616d in Fig. 6R) by changing the styling of the containers of the representations themselves, in some embodiments, the electronic device 500 instead indicates full selection of the messages by highlighting all of the content of the representations while maintaining the appearance of the containers.

Figs. 7A-7B are flow diagrams illustrating a method of providing for efficient selection of partial and/or full message content in accordance with some embodiments of the disclosure. The method 700 is optionally performed at an electronic device such as device 100, device 300, device 500 as described above with reference to Figs. 1A-1B, 2-3, 4A-4B and 5A-5H. Some operations in method 700 are, optionally combined and/or order of some operations is, optionally, changed.

As described below, the method 700 provides ways in which an electronic device provides for efficient selection of partial and/or full message content. The method reduces the cognitive burden on a user when interacting with a user interface of the device of the disclosure, thereby creating a more efficient human-machine interface. For battery-operated electronic devices, increasing the efficiency of the user's interaction with the user interface conserves power and increases the time between battery charges.

In some embodiments, method 700 is performed at an electronic device in communication with a display generation component and one or more input devices (e.g., a mobile device (e.g., a tablet, a smartphone, a media player), a computer (e.g., a desktop computer, a laptop computer), or a wearable device (e.g., a watch, a head-mounted device)). In some embodiments, the display generation component is a display integrated with the electronic device (optionally a touch screen display) and/or an external display such as a monitor, projector, television, etc.).

In some embodiments, such as in Fig. 6B, the electronic device 500 displays (702), via the display generation component, a messaging user interface that includes a representation 616d of a first message and a representation 616c of a second message. In some embodiments, the representation of a respective message includes an indication of a user account that sent the message and the content (e.g., text) of the message. The content of the message is optionally displayed within a container (e.g., a window or bubble or other visual container). In some embodiments, the representation of the respective message does not include a visual indication of the user account that sent the message. Instead, in some embodiments, for messaging conversations with two (or more) participants, messages from the user account of the electronic device are displayed aligned with one side of the messages user interface (e.g., the right side) and messages from different user accounts (e.g., from other electronic devices other than the electronic device) are aligned with the other side of the messages user interface (e.g., the left side).

In some embodiments, such as in Fig. 6C, while displaying the messaging user interface, the electronic device 500 receives (704), via the one or more input devices 451, a selection input 603 that includes a first portion and a second portion. In some embodiments, the selection input selects content of the messaging conversation (e.g., text, images, etc.). In some embodiments, the selection input includes a touchdown on a touch-sensitive surface and/or a click on a mouse button, followed by a drag input, followed by a liftoff from the touch-sensitive surface/mouse button. In some embodiments, the liftoff from the touch-sensitive surface/mouse button is the end of the selection input. In some embodiments, the first portion of the selection input is part of the drag while the touchdown/click down of the mouse button is maintained, and the second portion of the selection input is another part of the drag while the touchdown/click down of the mouse button is maintained. In some embodiments, the first portion and the second portion of the selection input are before the end of the selection input.

In some embodiments, such as in Fig. 6C, while receiving the selection input and before detecting an end of the selection input (706) (e.g., liftoff of selection (e.g., liftoff of a contact on a touch-sensitive surface such as a trackpad or touchscreen or liftoff of a selection button of a mouse or keyboard) of the messaging content or another indication that the user is done selecting the messaging content), in response to receiving the first portion of the selection input, the electronic device 500 indicates (708) that a first portion 624 of the first message will be selected when the end of the selection input is detected. The electronic device optionally alters a visual characteristic of the first portion (e.g., of text) to indicate that the first portion will be selected in response to detecting the end of the selection input. For example, the electronic device displays highlighting over or around the first portion, displays the first portion at a different size or color than it was displayed before, or displays a visual indication marking the bounds of the selection around the first portion.

In some embodiments, such as in Fig. 6C, while receiving the selection input and before detecting an end of the selection input (706), in response to receiving the second portion of the selection input, wherein the second portion of the selection input includes a movement input to a respective location in the messaging user interface (710) (e.g., the electronic device detects movement of a marker of the boundaries of the selection (e.g., movement of a cursor via a directional input detected at an input device such as a keyboard, mouse, trackpad, etc. or movement of a contact on a touch screen) beyond the first portion thereby selecting the second portion in addition to the first portion), in accordance with a determination that the respective location in the messaging user interface corresponds to a second portion 624 of the first message, the electronic device 500 indicates (712) that the first portion and the second portion of the first message, but not a third portion of the first message, will be selected when the end of the selection input is detected. In some embodiments, the electronic device detects movement of the selection input that encompasses the first and second portion of the first message, without encompassing a third portion of the first message. In some embodiments, the electronic device enables the user to select one or more portions, but not all, of the first message. For example, the user begins the selection input at the beginning of a first word of the first message and moves the selection input to encompass the entire first word and continues moving the selection input to encompass a second word in the first message and, in response, the electronic device highlights the first and second words in the first message without highlighting one or more other words in the first message. In this example, in response to detecting the end of the selection input, the electronic device selects the first and second words of the first message without selecting the one or more other words in the first message.

In some embodiments, such as in Fig. 6F, while receiving the selection input and before detecting an end of the selection input (706), in response to receiving the second portion of the selection input, wherein the second portion of the selection input includes a movement input to a respective location in the messaging user interface (710), in accordance with a determination that the respective location in the messaging user interface corresponds to a first portion of the second message (e.g., the movement is past one or more characters or words of the second message without encompassing the entirety of the second message), the electronic device indicates (714) that an entirety of the second message will be selected when the end of the selection input is detected. In some embodiments, the electronic device detects movement of the selection input that encompasses the first portion of the first message and the first portion of the second message. In some embodiments, in response to detecting movement of the selection input that encompasses portions of the first and second messages, the electronic device indicates that, in response to detecting the end of the selection input, the selection will include the entire second message even if the movement of the selection input does not encompass the entire second message. For example, the user begins selecting a sentence of the first message and moves the selection input to a location that encompasses one word, but not the entirety, of the second message and, in response to detecting the movement of the selection input, updates the messaging user interface to indicate that the first portion of the first message and the entirety of the second message will be selected. In some embodiments, the first portion of the first message is selected without selecting the entirety of the first message. In some embodiments, the entirety of the first message is selected even if the movement of the selection input does not encompass the entire first message.

In some embodiments, such as in Fig. 6H, while receiving the selection input and before detecting an end of the selection input (706), in response to receiving the second portion of the selection input, wherein the second portion of the selection input includes a movement input to a respective location in the messaging user interface (710), in accordance with a determination that the respective location in the messaging user interface corresponds to a second portion of the second message, different from the first portion of the second message, the electronic device 500 indicates (716) that the entirety of the second message will be selected when the end of the selection input is detected. In some embodiments, regardless of what portion of the second message is included in the movement of the selection input, the electronic device indicates that the entire second message will be selected in response to detecting the end of the selection input. In some embodiments, in response to detecting movement of a selection input that encompasses portions of more than one message, the electronic device indicates that the entirety of every message for which a portion is encompassed by the movement of the selection input will be selected in response to detecting the end of the selection. In some embodiments, the electronic device indicates that an entire message will be selected by updating an appearance of the container (e.g., window, bubble) of the message instead of updating an appearance of the content of the message. For example, the electronic device changes the color of a bubble including the content of a message that will be selected in its entirety.

The above-described manner of switching between partial and full selection of message content enables the electronic device to provide an efficient manner of selecting message content, which simplifies the interaction between the user and the electronic device and enhances the operability of the electronic device and makes the user-device interface more efficient (e.g., by enabling the user to quickly select multiple entire messages when desired and reducing the time the user would spend attempting to select part of a first message and part of a second message by communicating to the user that the entire second message will be selected before the selection input is final), which additionally reduces power usage and improves battery life of the electronic device by enabling the user to use the electronic device more quickly and efficiently.

In some embodiments, such as in Fig. 6G, the end of the selection input comprises a liftoff event. In some embodiments, the selection input comprises an initial selection that is held while a movement input is detected to designate the portions of content to be selected followed by a release of the selection (e.g., liftoff) to designate the end of the selection input. For example, selection made with a mouse includes an initial click, movement of the mouse, and then release of the mouse button, which is the liftoff. As another example, a selection made with a touch-sensitive surface includes a contact, movement of the contact, and then liftoff of the contact to end the selection input.

The above-described manner of ending the selection input in response to detection of a liftoff event enables the electronic device to efficiently stop adding content to a selection which simplifies the interaction between the user and the electronic device and enhances the operability of the electronic device and makes the user-device interface more efficient (e.g., by reducing the inputs needed to control a selection and make a selection), which additionally reduces power usage and improves battery life of the electronic device by enabling the user to use the electronic device more quickly and efficiently.

In some embodiments, such as in Fig. 6D, the electronic device 500 detects the end of the selection input. In some embodiments, such as in Fig. 6D, in response to detecting the end of the selection input, in accordance with the determination that the respective location in the messaging user interface corresponds to the second portion of the first message, the electronic device 500 selects the first portion and the second portion of the first message, but not the third portion of the first message, for further input. In some embodiments, a subsequent input corresponding to a request to perform an action on selected content will be directed towards the first and second portions of the first message without being directed towards the third portion of the first message. For example, further actions include copying, cutting, searching, and other actions. In some embodiments, the electronic device displays the selected portion of the first message with a visual characteristic that is different from a visual characteristic of the portion of the first message that is not selected. For example, the electronic device highlights the selected portion of the first content. In some embodiments, the electronic device changes the size or color of the selected portion of content or visually distinguishes it in another way.

In some embodiments, such as in Fig. 6G, in response to detecting the end of the selection input, in accordance with the determination that the respective location in the messaging user interface corresponds to the first portion of the second message, the electronic device 500 selects the entirety of the second message for further input. In some embodiments, a subsequent input corresponding to a request to perform an action on selected content will be directed towards the entirety of the second message and a portion of the first message included in the selection. For example, further actions include copying, cutting, searching, and other actions. In some embodiments, the selected content is displayed with an appearance that indicates that it is selected such as by changing the appearance of the content or changing an appearance of a container in which the contents of the second message are displayed. In some embodiments, the electronic device displays the selected content with highlighting, with a different color than unselected content, at a different size than unselected content, or distinguishes the selected content in some other way. In some embodiments, the electronic device displays a container in which the content of the second message is displayed in a different color than the color in which the container was displayed before selecting the second message.

In some embodiments, such as in Fig. 6D, in response to detecting the end of the selection input, in accordance with the determination that the respective location in the messaging user interface corresponds to the second portion of the second message, different from the first portion of the second message, the electronic device 500 selects the entirety of the second message for further input. In some embodiments, a subsequent input corresponding to a request to perform an action on selected content will be directed towards the entirety of the second message and a portion of the first message included in the selection. For example, further actions include copying, cutting, searching, and other actions.

The above-described manner of selecting the portions of the first and second messages indicated by the selection input for further action enables the electronic device to indicate to the user the portions of the messages to which input will be directed before the input is entered, which simplifies the interaction between the user and the electronic device and enhances the operability of the electronic device and makes the user-device interface more efficient (e.g., by reducing user error when performing actions on selected portions of messages), which additionally reduces power usage and improves battery life of the electronic device by enabling the user to use the electronic device more quickly and efficiently.

In some embodiments, such as in Fig. 6B, the representation 616c of the second message includes a user interface element that contains a content of the second message. In some embodiments, the content of the second message is displayed within a container, such as a window, bubble, or other displayed outline around the content of the second message. The user interface element optionally includes the content of the second message displayed on a background contained within the user interface element.

In some embodiments, such as in Fig. 6B, before receiving the selection input, the user interface element is displayed with a visual characteristic having a first value. In some embodiments, while the user interface element is not selected, the outline of the user interface element is displayed with a first thickness, a first line style, or a first color and/or the background of the user interface element is displayed with a first color, translucency, or pattern, or the user interface element itself is displayed at a first size or location. In some embodiments, before receiving the selection input, the contents of the second message are displayed with a first visual appearance. For example, text content is displayed with a first size, color, and text styling and images are displayed at first sizes, colors, and with first outlines or lack of outlines.

In some embodiments, such as in Fig. 6K, indicating that the entirety of the second message will be selected when the end of the selection input is detected includes displaying the user interface element with the visual characteristic having a second value, different from the first value. In some embodiments, while the entirety of the user interface element is selected, the outline of the user interface element is displayed with a second thickness, a second line style, or a second color and/or the background of the user interface element is displayed with a second color, translucency, or pattern, or the user interface element itself is displayed at a second size or location different from the way the user interface element was displayed prior to the selection of the user interface element. In some embodiments, after receiving the selection input, the contents of the second message are displayed with the same first visual appearance with which the contents were displayed prior to detecting the selection input. In some embodiments, one or more visual characteristics of the contents of the message are different after receiving the selection input from the visual characteristics of the contents of the message before the selection input was received. For example, text content is displayed with a first size, color, and text styling and images are displayed at first sizes, colors, and with first outlines or lack of outlines.

The above-described manner of updating the visual characteristic of the user interface element containing the content of the second message in response to detecting selection of the entire second message enables the electronic device to efficiently communicate to the user that the entire content of the second message is selected, which simplifies the interaction between the user and the electronic device and enhances the operability of the electronic device and makes the user-device interface more efficient (e.g., by reducing user error and the inputs required to correct user error caused by misunderstanding which content is selected), which additionally reduces power usage and improves battery life of the electronic device by enabling the user to use the electronic device more quickly and efficiently.

In some embodiments, such as in Fig. 6B, the representation 616c of the second message includes a user interface element that contains a content of the second message (e.g., In some embodiments, the content of the second message is displayed within a container, such as a window, bubble, or other displayed outline around the content of the second message. The user interface element optionally includes the content of the second message displayed on a background contained within the user interface element.

In some embodiments, such as in Fig. 6B, before receiving the selection input, the user interface element is displayed with a visual characteristic having a first value, and the content of the second message is displayed without (e.g., being overlaid by) a selection indicator, wherein the selection indicator is different from the user interface element. In some embodiments, while the contents of the second message is not selected, the outline of the user interface element is displayed with a first thickness, a first line style, or a first color and/or the background of the user interface element is displayed with a first color, translucency, or pattern, or the user interface element itself is displayed at a first size or location. In some embodiments, the selection indicator is highlighting displayed overlaid on the content of the message that does not encompass the entirety of the user interface element that contains the content of the second message. In some embodiments, the selection indicator is the display of the content of the message with a visual characteristic having a different value than the value of the visual characteristic prior to selection of the content of the message. For example, the electronic device displays selected text with a different color, text styling (e.g., bold, italic, underline), or size than text that is not selected. In some embodiments, the selection indicator is a user interface element displayed to contain the contents of the second message, such as a box or other outline displayed around the selected content, and is different from the user interface element that contains the content of the message.

In some embodiments, indicating that the entirety of the second message will be selected when the end of the selection input is detected includes maintaining display of the user interface element with the visual characteristic having the first value, such as in Fig. 6B. In some embodiments, while the contents of the second message is selected, the outline of the user interface element continues to be displayed with a first thickness, a first line style, or a first color and/or the background of the user interface element continues to be displayed with a first color, translucency, or pattern, or the user interface element itself continues to be displayed at a first size or location.

In some embodiments, indicating that the entirety of the second message will be selected when the end of the selection input is detected includes displaying the content of the second message with (e.g., overlaid by) the selection indicator similar to highlighting 624, such as in Fig. 6J. In some embodiments, all of the contents of the second message are displayed with the selection indicator in response to selection of the entire second message. In some embodiments, displaying the contents with the selection indicator includes one or more of displaying the contents in a different size, color, text styling (e.g., bold, italics, underlined, highlighted), and/or outline than the way the contents are displayed before being selected or indicated for selection. The above-described manner of displaying the content of the second message with the selection indicator in response to selection of the second message enables the electronic device to efficiently indicate to the user that the content of the second message is selected, which simplifies the interaction between the user and the electronic device and enhances the operability of the electronic device and makes the user-device interface more efficient (e.g., by reducing user error and the inputs needed to correct user error), which additionally reduces power usage and improves battery life of the electronic device by enabling the user to use the electronic device more quickly and efficiently.

In some embodiments, such as in Fig. 6L, in response to receiving the second portion of the selection input, in accordance with the determination that the respective location in the messaging user interface corresponds to the first portion of the second message, the electronic device 500 indicates that the first portion of the first message, but not a fourth portion of the first message, will be selected when the end of the selection input is detected. In some embodiments, the only portion of the first message that will be selected in response to detecting the end of the selection input is the first portion of the first message that is encompassed by the selection input even though the entire second message will be selected in response to the end of the selection input. The electronic device optionally indicates that the first portion of the first message will be selected in response to the end of the selection input while the selection input is being made before the end of the selection input is detected. In some embodiments, the electronic device indicates content for selection by changing a size, color, text styling (e.g., bold, underline, highlighted, italics), and/or outline of the content compared to how the content was displayed before being indicated for selection. In some embodiments, indicating the first portion of the first message and the entire second message for selection includes indicating that content between the first portion of the first message and the entire second message, such as additional content of the first message or another message between the first and second messages, will also be selected.

In some embodiments, such as in Fig. 6L, in accordance with the determination that the respective location in the messaging user interface corresponds to the second portion of the second message, the electronic device 500 indicates that the first portion of the first message, but not the fourth portion of the first message, will be selected when the end of the selection input is detected. In some embodiments, the only portion of the first message that will be selected in response to detecting the end of the selection input is the first portion of the first message that is encompassed by the selection input even though the entire second message will be selected in response to the end of the selection input regardless of the portion of the second message that is encompassed by the selection input. In some embodiments, the electronic device indicates content for selection by changing a size, color, text styling (e.g., bold, underline, highlighted, italics), and/or outline of the content compared to how the content was displayed before being indicated for selection. In some embodiments, indicating the first portion of the first message and the entire second message for selection includes indicating that content between the first portion of the first message and the entire second message, such as additional content of the first message or another message between the first and second messages, will also be selected.

The above-described manner of indicating that the first portion of the first message will be selected and the fourth portion of the first message will not be selected enables the electronic device to provide a way for the user to control the portions of the first message that will be selected even when selecting an entirety of another message, which simplifies the interaction between the user and the electronic device and enhances the operability of the electronic device and makes the user-device interface more efficient (e.g., by reducing user error and reducing the user inputs needed to correct an error of selecting an unintended portion of the first messages), which additionally reduces power usage and improves battery life of the electronic device by enabling the user to use the electronic device more quickly and efficiently.

In some embodiments, such as in Fig. 6K, in response to receiving the second portion of the selection input, in accordance with the determination that the respective location in the messaging user interface corresponds to the first portion of the second message, the electronic device 500 indicates that an entirety, more than the first portion, of the first message will be selected when the end of the selection input is detected. In some embodiments, in response to detecting the selection input encompassing the first portion of the first message and the first portion of the second message, the electronic device indicates that the entire first message and the entire second message will be selected because the selection input includes portions of more than one message. In some embodiments, the electronic device indicates that the entire first message will be selected by displaying the contents of the first message with a visual characteristic (e.g., highlighting, size, color, outlining, etc.) different from the way in which the contents of the first message was displayed prior to indicating that the first message will be selected. In some embodiments, the electronic device indicates that the entire first message will be selected by displaing a user interface element containing the contents of the first message (e.g., a bubble or other container) with a visual characteristic (e.g., size, color, outline style) different from the way the user interface element containing the contents of the first message was displayed prior to indicating that the first message will be selected.

In some embodiments, such as in Fig. 6K, in accordance with the determination that the respective location in the messaging user interface corresponds to the second portion of the second message, the electronic device 500 indicates that the entirety of the first message will be selected when the end of the selection input is detected. In some embodiments, in response to detecting the selection input encompassing the first portion of the first message and the second portion of the second message, the electronic device indicates that the entire first message and the entire second message will be selected because the selection input includes portions of more than one message. In some embodiments, the electronic device indicates that the entire first message will be selected by displaying the contents of the first message with a visual characteristic (e.g., highlighting, size, color, outlining, etc.) different from the way in which the contents of the first message was displayed prior to indicating that the first message will be selected. In some embodiments, the electronic device indicates that the entire first message will be selected by displaying a user interface element containing the contents of the first message (e.g., a bubble or other container) with a visual characteristic (e.g., size, color, outline style) different from the way the user interface element containing the contents of the first message was displayed prior to indicating that the first message will be selected.

The above-described manner of indicating that the entirety of the first message will be selected in response to the selection input designating a portion of the first message and a portion of a second message enables the electronic device to efficiently provide a way of selecting multiple entire messages, which simplifies the interaction between the user and the electronic device and enhances the operability of the electronic device and makes the user-device interface more efficient (e.g., by reducing the number of inputs needed to select the entire first message when selecting the entire second message), which additionally reduces power usage and improves battery life of the electronic device by enabling the user to use the electronic device more quickly and efficiently.

In some embodiments, such as in Fig. 6L, while receiving the selection input and before detecting the end of the selection input, after receiving the first portion and the second portion of the selection input, the electronic device 500 receives a third portion of the selection input, wherein the third portion of the selection input includes a movement input to a second respective location in the messaging user interface (e.g., the location of the input (e.g., a location of a cursor or insertion marker in the user interface indicating a current location of an input device or the location of a finger on a touch screen) moves from a location within the second message to a location within the first message). In response to the third portion of the selection input, the electronic device no longer indicates that any portion of the second message will be selected because the selection input has moved away from encompassing any portion of the second message.

In some embodiments, such as in Fig. 6L, in response to receiving the third portion of the selection input, in accordance with a determination that the second respective location in the messaging user interface corresponds to a fourth portion of the first message, the electronic device 500 indicates that the first portion and the fourth portion of the first message, but not a fifth portion of the first message, will be selected when the end of the selection input is detected. In some embodiments, the third portion of the selection input causes the selection input to encompass the first portion and the fourth portion of the first message without encompassing the entire first message. In response to detecting the end of the selection input, the electronic device optionally selects the first and fourth portion of the first message (and any portions of the first message between the first and fourth portions of the first message) without selecting the entire first message. In some embodiments, the electronic device indicates that the first and fourth portion of the first message will be selected by displaying the first and fourth portions of the first message with a visual characteristic (e.g., highlighting, size, color, outlining, etc.) different from the way in which the first and fourth portions of the first message were displayed prior to indicating that the first and fourth portions of first message will be selected. In some embodiments, the third portion of the selection input causes the electronic device to designate a sixth portion of the first message different from the first and fourth portions of the first message for selection. For example, the user begins the selection input at a respective location within the first message and moves the selection input in a first direction to select a first respective portion of the first message and the second message and then moves the selection input in a second direction opposite from the first direction to a second respective location. In this example, in response to the movement of the selection input to the second respective location within the first message, the electronic device designates a portion of the first message between the first respective location in the first message and the second respective location within the first message for input.

The above-described manner of indicating that the first portion and the fourth portion of the first message will be selected in response to the third portion of the selection input enables the electronic device to efficiently transition between selecting entire messages and selecting parts of one message, which simplifies the interaction between the user and the electronic device and enhances the operability of the electronic device and makes the user-device interface more efficient (e.g., by reducing the number of inputs needed to change selection modes), which additionally reduces power usage and improves battery life of the electronic device by enabling the user to use the electronic device more quickly and efficiently.

In some embodiments, such as in Fig. 6N, while a first portion of a third message different from the first message and different from the second message is selected (e.g., and other portions of the third message and/or portions of a fourth message are not selected), the electronic device 500 receives, via the one or more input devices, a second selection input that is associated with a second respective location in the messaging user interface, wherein the second selection input 626 corresponds to a request to select an additional one or more portions of one or more messages, and the second selection input does not include a movement input. In some embodiments, the second selection input is made by entering an input that modifies a respective portion of respective content that is to be selected, such as selection or depression of a shift key to denote that all content between a first selection and a second selection are to be selected, selection of an option key to denote that the selected content is not consecutive in the user interface (e.g., selecting content between first and second selections and selecting content between third and fourth selections without selecting content between the two selections). In some embodiments, the user first designates a respective portion of the messaging conversation (e.g., including content within the third message and/or a fourth message) for selection, such as by clicking a mouse, moving a mouse, then releasing the button on a mouse or touching a touch screen, moving the contact, and then lifting the contact off, then presses a key associated with a special selection mode (e.g., a shift key, a control key, a command key, or another function key) and then provides a further selection input (e.g., including clicking a mouse or touching a touch screen).

In some embodiments, while receiving the second selection input and before detecting an end of the second selection input, in accordance with a determination that the second respective location in the messaging user interface corresponds to the second portion of the third message, the electronic device 500 indicates that the first portion and the second portion of the third message, but not the third portion of the third message, will be selected when the end of the second selection input is detected, such as in Fig. 6L. In some embodiments, in response to a selection input that encompasses the first and second portions of the third message, the electronic device designates the first and second portions of the third message for selection without designating the entire third message for selection. In some embodiments, the electronic device also designates content of the third message between the first and second portions of the third message for selection.

In some embodiments, such as in Fig. 6N, while receiving the second selection input and before detecting an end of the second selection input, in accordance with a determination that the second respective location in the messaging user interface corresponds to the first portion of a fourth message different from the first message and different from the second message (and different from the third message), the electronic device 500 indicates that the entirety of the fourth message will be selected when the end of the second selection input is detected. In some embodiments, in response to the selection input that encompasses the first portion of the fourth message, the electronic device designates the entire fourth message for selection even if the first portion of the fourth message does not include the entirety of the fourth message.

In some embodiments, such as in Fig. 6N, while receiving the second selection input and before detecting an end of the second selection input, in accordance with a determination that the second respective location in the messaging user interface corresponds to a second portion of the fourth message, different from the first portion of the fourth message, the electronic device 500 indicates that the entirety of the fourth message will be selected when the end of the second selection input is detected. In some embodiments, in response to the selection input that encompasses the second portion of the fourth message, the electronic device designates the entire fourth message for selection even if the second portion of the fourth message does not include the entirety of the fourth message.

The above-described manner of designating the entire fourth message for selection in response to the second selection input that does not include a movement input enables the electronic device to provide an efficient way of selecting entire messages when using selection inputs that do not include movement inputs, which simplifies the interaction between the user and the electronic device and enhances the operability of the electronic device and makes the user-device interface more efficient (e.g., by reducing the amount of time and inputs it takes to designate the entire fourth message for selection and to select the fourth second message), which additionally reduces power usage and improves battery life of the electronic device by enabling the user to use the electronic device more quickly and efficiently.

It should be understood that the particular order in which the operations in Figs. 7A-7B have been described is merely exemplary and is not intended to indicate that the described order is the only order in which the operations could be performed. One of ordinary skill in the art would recognize various ways to reorder the operations described herein.

The operations in the information processing methods described above are, optionally, implemented by running one or more functional modules in an information processing apparatus such as general purpose processors (e.g., a as described with respect to Figs. 1A-1B, 3, 5A-5H) or application specific chips. Further, the operations described above with reference to Fig. 7A-7B are, optionally, implemented by components depicted in Figs. 1A-1B. For example, displaying operation 702, receiving operation 704, and indicating operation 712 are, optionally, implemented by event sorter 170, event recognizer 180, and event handler 190. Event monitor 171 in event sorter 170 detects a contact on touch screen 504, and event dispatcher module 174 delivers the event information to application 136-1. A respective event recognizer 180 of application 136-1 compares the event information to respective event definitions 186, and determines whether a first contact at a first location on the touch screen corresponds to a predefined event or sub-event, such as selection of an object on a user interface. When a respective predefined event or sub-event is detected, event recognizer 180 activates an event handler 190 associated with the detection of the event or sub-event. Event handler 190 optionally utilizes or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figs. 1A-1B.

As described above, one aspect of the present technology is the gathering and use of data available from specific and legitimate sources to present content of relevance to the user. The present disclosure contemplates that in some instances, this gathered data may include personal information data that uniquely identifies or can be used to identify a specific person. Such personal information data can include demographic data, location-based data, online identifiers, telephone numbers, e-mail addresses, home addresses, data or records relating to a user's health or level of fitness (e.g., vital signs measurements, medication information, exercise information), date of birth, or any other personal information).

The present disclosure recognizes that the use of such personal information data, in the present technology, can be used to the benefit of users. For example, accessing the contact information of the user enables the electronic device to send and receive messages, and/or provide rich link ("mention") functionality. Accordingly, use of such personal information data enables users to communicate with other devices. Further, other uses for personal information data that benefit the user are also contemplated by the present disclosure.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominent and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations that may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. For example, users can restrict sharing of personal information, such as contact information, when interacting with messaging applications.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, users can block sharing of contact information or other personal information while interacting with messaging applications.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated without departing from the scope of the appended claims.

## Claims

1. A method (700) of selecting a message content, the method comprising:
at an electronic device in communication with a display generation component and one or more input devices:
displaying (702), via the display generation component, a messaging user interface that includes a representation of a first message and a representation of a second message;
while displaying the messaging user interface, receiving (704), via the one or more input devices, a selection input that includes a first portion and a second portion; and
while (706) receiving the selection input and before detecting an end of the selection input:
in response (708) to receiving the first portion of the selection input, indicating that a first portion of the first message will be selected when the end of the selection input is detected; and
in response (710) to receiving the second portion of the selection input, wherein the second portion of the selection input includes a movement input to a respective location in the messaging user interface:
in accordance (712) with a determination that the respective location in the messaging user interface corresponds to a second portion of the first message, indicating that the first portion and the second portion of the first message, but not a third portion of the first message, will be selected when the end of the selection input is detected;
**characterised by** further comprising:
in accordance (714) with a determination that the respective location in the messaging user interface corresponds to a first portion of the second message, indicating that an entirety of the second message, the first portion of the first message, but not the third portion of the first message, will be selected when the end of the selection input is detected; and
in accordance (716) with a determination that the respective location in the messaging user interface corresponds to a second portion of the second message, different from the first portion of the second message, indicating that the entirety of the second message, the first portion of the first message, but not the third portion of the first message, will be selected when the end of the selection input is detected.

2. The method of claim 1, wherein the end of the selection input comprises a liftoff event.

3. The method of any of claims 1-2, further comprising:
detecting the end of the selection input; and
in response to detecting the end of the selection input:
in accordance with the determination that the respective location in the messaging user interface corresponds to the second portion of the first message, selecting the first portion and the second portion of the first message, but not the third portion of the first message, for further input;
in accordance with the determination that the respective location in the messaging user interface corresponds to the first portion of the second message, selecting the entirety of the second message for further input; and
in accordance with the determination that the respective location in the messaging user interface corresponds to the second portion of the second message, different from the first portion of the second message, selecting the entirety of the second message for further input.

4. The method of any of claims 1-3, wherein:
the representation of the second message includes a user interface element that contains a content of the second message,
before receiving the selection input, the user interface element is displayed with a visual characteristic having a first value, and
indicating that the entirety of the second message will be selected when the end of the selection input is detected includes displaying the user interface element with the visual characteristic having a second value, different from the first value.

5. The method of any of claims 1-3, wherein:
the representation of the second message includes a user interface element that contains a content of the second message,
before receiving the selection input, the user interface element is displayed with a visual characteristic having a first value, and the content of the second message is displayed without a selection indicator, wherein the selection indicator is different from the user interface element, and
indicating that the entirety of the second message will be selected when the end of the selection input is detected includes:
maintaining display of the user interface element with the visual characteristic having the first value; and
displaying the content of the second message with the selection indicator.

6. The method of any of claims 1-5, further comprising:
in response to receiving the second portion of the selection input:
in accordance with the determination that the respective location in the messaging user interface corresponds to the first portion of the second message, indicating that the first portion of the first message, but not a fourth portion of the first message, will be selected when the end of the selection input is detected; and
in accordance with the determination that the respective location in the messaging user interface corresponds to the second portion of the second message, indicating that the first portion of the first message, but not the fourth portion of the first message, will be selected when the end of the selection input is detected.

7. The method of any of claims 1-5, further comprising:
in response to receiving the second portion of the selection input:
in accordance with the determination that the respective location in the messaging user interface corresponds to the first portion of the second message, indicating that an entirety, more than the first portion, of the first message will be selected when the end of the selection input is detected; and
in accordance with the determination that the respective location in the messaging user interface corresponds to the second portion of the second message, indicating that the entirety of the first message will be selected when the end of the selection input is detected.

8. The method of any of claims 1-7, further comprising:
while receiving the selection input and before detecting the end of the selection input:
after receiving the first portion and the second portion of the selection input, receiving a third portion of the selection input, wherein the third portion of the selection input includes a movement input to a second respective location in the messaging user interface ;
and in response to receiving the third portion of the selection input:
in accordance with a determination that the second respective location in the messaging user interface corresponds to a fourth portion of the first message, indicating that the first portion and the fourth portion of the first message, but not a fifth portion of the first message, will be selected when the end of the selection input is detected.

9. The method of any of claims 1-8, further comprising:
while a first portion of a third message different from the first message and different from the second message is selected , receiving, via the one or more input devices, a second selection input that is associated with a second respective location in the messaging user interface, wherein the second selection input corresponds to a request to select an additional one or more portions of one or more messages, and the second selection input does not include a movement input ; and
while receiving the second selection input and before detecting an end of the second selection input:
in accordance with a determination that the second respective location in the messaging user interface corresponds to a second portion of the third message, indicating that the first portion and the second portion of the third message, but not the third portion of the third message, will be selected when the end of the second selection input is detected ;
in accordance with a determination that the second respective location in the messaging user interface corresponds to the first portion of a fourth message different from the first message and different from the second message , indicating that the entirety of the fourth message will be selected when the end of the second selection input is detected ; and
in accordance with a determination that the second respective location in the messaging user interface corresponds to a second portion of the fourth message, different from the first portion of the fourth message, indicating that the entirety of the fourth message will be selected when the end of the second selection input is detected.

10. An electronic device, comprising:
one or more processors;
memory; and
one or more programs, wherein the one or more programs are stored in the memory and configured to be executed by the one or more processors, the one or more programs including instructions for performing any of the methods of claims 1-9.

11. A non-transitory computer readable storage medium storing one or more programs, the one or more programs comprising instructions, which when executed by one or more processors of an electronic device, cause the electronic device to perform any of the methods of claims 1-9.

## Patentansprüche

1. Verfahren (700) zum Auswählen eines Nachrichteninhalts, wobei das Verfahren Folgendes umfasst:
an einer elektronischen Vorrichtung in Kommunikation mit einer Anzeigeerzeugungskomponente und einer oder mehreren Eingabevorrichtungen:
Anzeigen (702), über die Anzeigeerzeugungskomponente, einer Nachrichtenübermittlungsbenutzerschnittstelle, die eine Darstellung einer ersten Nachricht und eine Darstellung einer zweiten Nachricht beinhaltet;
während des Anzeigens der Nachrichtenübermittlungsbenutzerschnittstelle, Empfangen (704), über die eine oder die mehreren Eingabevorrichtungen, einer Auswahleingabe, die einen ersten Abschnitt und einen zweiten Abschnitt beinhaltet; und
während (706) des Empfangens der Auswahleingabe und vor Erkennen eines Endes der Auswahleingabe:
als Reaktion (708) auf das Empfangen des ersten Abschnitts der Auswahleingabe, Angeben, dass ein erster Abschnitt der ersten Nachricht ausgewählt wird, wenn das Ende der Auswahleingabe erkannt wird; und
als Reaktion (710) auf das Empfangen des zweiten Abschnitts der Auswahleingabe, wobei der zweite Abschnitt der Auswahleingabe eine Bewegungseingabe an einer entsprechenden Stelle in der Nachrichtenübermittlungsbenutzerschnittstelle beinhaltet:
entsprechend (712) einer Bestimmung, dass die entsprechende Stelle in der Nachrichtenübermittlungsbenutzerschnittstelle mit einem zweiten Abschnitt der ersten Nachricht übereinstimmt, Angeben, dass der erste Abschnitt und der zweite Abschnitt der ersten Nachricht, jedoch nicht ein dritter Abschnitt der ersten Nachricht ausgewählt werden, wenn das Ende der Auswahleingabe erkannt wird;
**dadurch gekennzeichnet, dass** es ferner Folgendes umfasst:
entsprechend (714) einer Bestimmung, dass die entsprechende Stelle in der Nachrichtenübermittlungsbenutzerschnittstelle mit einem ersten Abschnitt der zweiten Nachricht übereinstimmt, Angeben, dass eine Gesamtheit der zweiten Nachricht, der erste Abschnitt der ersten Nachricht, jedoch nicht der dritte Abschnitt der ersten Nachricht ausgewählt werden, wenn das Ende der Auswahleingabe erkannt wird; und
entsprechend (716) einer Bestimmung, dass die entsprechende Stelle in der Nachrichtenübermittlungsbenutzerschnittstelle mit einem zweiten Abschnitt der zweiten Nachricht übereinstimmt, der sich von dem ersten Abschnitt der zweiten Nachricht unterscheidet, Angeben, dass die Gesamtheit der zweiten Nachricht, der erste Abschnitt der ersten Nachricht, jedoch nicht der dritte Abschnitt der ersten Nachricht ausgewählt werden, wenn das Ende der Auswahleingabe erkannt wird.

2. Verfahren nach Anspruch 1, wobei das Ende der Auswahleingabe ein Startereignis umfasst.

3. Verfahren nach einem der Ansprüche 1-2, ferner umfassend:
Erkennen des Endes der Auswahleingabe; und
als Reaktion auf das Erkennen des Endes der Auswahleingabe:
entsprechend der Bestimmung, dass die entsprechende Stelle in der Nachrichtenübermittlungsbenutzerschnittstelle mit dem zweiten Abschnitt der ersten Nachricht übereinstimmt, Auswählen des ersten Abschnitts und des zweiten Abschnitts der ersten Nachricht, jedoch nicht des dritten Abschnitts der ersten Nachricht für eine weitere Eingabe;
entsprechend der Bestimmung, dass die entsprechende Stelle in der Nachrichtenübermittlungsbenutzerschnittstelle mit dem ersten Abschnitt der zweiten Nachricht übereinstimmt, Auswählen der Gesamtheit der zweiten Nachricht für eine weitere Eingabe; und
entsprechend der Bestimmung, dass die entsprechende Stelle in der Nachrichtenübermittlungsbenutzerschnittstelle mit dem zweiten Abschnitt der zweiten Nachricht übereinstimmt, der sich von dem ersten Abschnitt der zweiten Nachricht unterscheidet, Auswählen der Gesamtheit der zweiten Nachricht für eine weitere Eingabe.

4. Verfahren nach einem der Ansprüche 1-3, wobei:
die Darstellung der zweiten Nachricht ein Benutzerschnittstellenelement, das einen Inhalt der zweiten Nachricht enthält, beinhaltet,
vor Empfangen der Auswahleingabe das Benutzerschnittstellenelement mit einem visuellen Merkmal, das einen ersten Wert aufweist, angezeigt wird, und
Angeben, dass die Gesamtheit der zweiten Nachricht ausgewählt wird, wenn das Ende der Auswahleingabe erkannt wird, Anzeigen des Benutzerschnittstellenelements mit dem visuellen Merkmal, das einen zweiten Wert aufweist, der sich von dem ersten Wert unterscheidet, beinhaltet.

5. Verfahren nach einem der Ansprüche 1-3, wobei:
die Darstellung der zweiten Nachricht ein Benutzerschnittstellenelement, das einen Inhalt der zweiten Nachricht enthält, beinhaltet,
vor Empfangen der Auswahleingabe das Benutzerschnittstellenelement mit einem visuellen Merkmal, das einen ersten Wert aufweist, angezeigt wird und der Inhalt der zweiten Nachricht ohne eine Auswahlangabe angezeigt wird, wobei sich die Auswahlangabe von dem Benutzerschnittstellenelement unterscheidet, und
Angeben, dass die Gesamtheit der zweiten Nachricht ausgewählt wird, wenn das Ende der Auswahleingabe erkannt wird, Folgendes beinhaltet:
Beibehalten der Anzeige des Benutzerschnittstellenelements mit dem visuellen Merkmal, das den ersten Wert aufweist; und
Anzeigen des Inhalts der zweiten Nachricht mit der Auswahlangabe.

6. Verfahren nach einem der Ansprüche 1-5, ferner umfassend:
als Reaktion auf das Empfangen des zweiten Abschnitts der Auswahleingabe:
entsprechend der Bestimmung, dass die entsprechende Stelle in der Nachrichtenübermittlungsbenutzerschnittstelle mit dem ersten Abschnitt der zweiten Nachricht übereinstimmt, Angeben, dass der erste Abschnitt der ersten Nachricht, jedoch nicht ein vierter Abschnitt der ersten Nachricht ausgewählt wird, wenn das Ende der Auswahleingabe erkannt wird; und
entsprechend der Bestimmung, dass die entsprechende Stelle in der Nachrichtenübermittlungsbenutzerschnittstelle mit dem zweiten Abschnitt der zweiten Nachricht übereinstimmt, Angeben, dass der erste Abschnitt der ersten Nachricht, jedoch nicht der vierte Abschnitt der ersten Nachricht ausgewählt wird, wenn das Ende der Auswahleingabe erkannt wird.

7. Verfahren nach einem der Ansprüche 1-5, ferner umfassend:
als Reaktion auf das Empfangen des zweiten Abschnitts der Auswahleingabe:
entsprechend der Bestimmung, dass die entsprechende Stelle in der Nachrichtenübermittlungsbenutzerschnittstelle mit dem ersten Abschnitt der zweiten Nachricht übereinstimmt, Angeben, dass eine Gesamtheit, mehr als der erste Abschnitt, der ersten Nachricht ausgewählt wird, wenn das Ende der Auswahleingabe erkannt wird; und
entsprechend der Bestimmung, dass die entsprechende Stelle in der Nachrichtenübermittlungsbenutzerschnittstelle mit dem zweiten Abschnitt der zweiten Nachricht übereinstimmt, Angeben, dass die Gesamtheit der ersten Nachricht ausgewählt wird, wenn das Ende der Auswahleingabe erkannt wird.

8. Verfahren nach einem der Ansprüche 1-7, ferner umfassend:
während des Empfangens der Auswahleingabe und vor dem Erkennen des Endes der Auswahleingabe:
nach Empfangen des ersten Abschnitts und des zweiten Abschnitts der Auswahleingabe, Empfangen eines dritten Abschnitts der Auswahleingabe, wobei der dritte Abschnitt der Auswahleingabe eine Bewegungseingabe an einer zweiten entsprechenden Stelle in der Nachrichtenübermittlungsbenutzerschnittstelle beinhaltet;
und als Reaktion auf das Empfangen des dritten Abschnitts der Auswahleingabe:
entsprechend einer Bestimmung, dass die zweite entsprechende Stelle in der Nachrichtenübermittlungsbenutzerschnittstelle mit einem vierten Abschnitt der ersten Nachricht übereinstimmt, Angeben, dass der erste Abschnitt und der vierte Abschnitt der ersten Nachricht, jedoch nicht ein fünfter Abschnitt der ersten Nachricht ausgewählt werden, wenn das Ende der Auswahleingabe erkannt wird.

9. Verfahren nach einem der Ansprüche 1-8, ferner umfassend:
während ein erster Abschnitt einer dritten Nachricht, der sich von der ersten Nachricht unterscheidet und der sich von der zweiten Nachricht unterscheidet, ausgewählt wird, Empfangen, über die eine oder die mehreren Eingabevorrichtungen, einer zweiten Auswahleingabe, die einer zweiten entsprechenden Stelle in der Nachrichtenübermittlungsbenutzerschnittstelle zugeordnet ist, wobei die zweite Auswahleingabe mit einer Anforderung, eine oder mehrere zusätzliche Abschnitte einer oder mehrerer Nachrichten auszuwählen, übereinstimmt und die zweite Auswahleingabe keine Bewegungseingabe beinhaltet; und
während des Empfangens der zweiten Auswahleingabe und vor dem Erkennen eines Endes der zweiten Auswahleingabe:
entsprechend einer Bestimmung, dass die zweite entsprechende Stelle in der Nachrichtenübermittlungsbenutzerschnittstelle mit einem zweiten Abschnitt der dritten Nachricht übereinstimmt, Angeben, dass der erste Abschnitt und der zweite Abschnitt der dritten Nachricht, jedoch nicht ein dritter Abschnitt der dritten Nachricht ausgewählt werden, wenn das Ende der zweiten Auswahleingabe erkannt wird;
entsprechend einer Bestimmung, dass die zweite entsprechende Stelle in der Nachrichtenübermittlungsbenutzerschnittstelle mit dem ersten Abschnitt einer vierten Nachricht übereinstimmt, die sich von der ersten Nachricht unterscheidet und die sich von der zweiten Nachricht unterscheidet, Angeben, dass die Gesamtheit der vierten Nachricht ausgewählt wird, wenn das Ende der zweiten Auswahleingabe erkannt wird und
entsprechend einer Bestimmung, dass die zweite entsprechende Stelle in der Nachrichtenübermittlungsbenutzerschnittstelle mit einem zweiten Abschnitt der vierten Nachricht übereinstimmt, die sich von dem ersten Abschnitt der vierten Nachricht unterscheidet, Angeben, dass die Gesamtheit der vierten Nachricht ausgewählt wird, wenn das Ende der zweiten Auswahleingabe erkannt wird.

10. Elektronische Vorrichtung, umfassend:
einen oder mehrere Prozessoren;
einen Speicher; und
ein oder mehrere Programme, wobei das eine oder die mehreren Programme in dem Speicher gespeichert und dazu konfiguriert sind, durch den einen oder die mehreren Prozessoren ausgeführt zu werden, wobei das eine oder die mehreren Programme Anweisungen zum Durchführen eines der Verfahren nach den Ansprüchen 1-9 beinhalten.

11. Nichtflüchtiges computerlesbares Speichermedium, das ein oder mehrere Programme speichert, wobei das eine oder die mehreren Programme Anweisungen umfassen, die, wenn sie durch einen oder mehrere Prozessoren einer elektronischen Vorrichtung ausgeführt werden, die elektronische Vorrichtung dazu veranlassen, eines der Verfahren nach den Ansprüchen 1-9 durchzuführen.

## Revendications

1. Procédé (700) de sélection d'un contenu de message, le procédé comprenant :
au niveau d'un dispositif électronique en communication avec un composant de génération d'affichage et un ou plusieurs dispositifs d'entrée :
l'affichage (702), via le composant de génération d'affichage, d'une interface utilisateur de messagerie qui inclut une représentation d'un premier message et une représentation d'un deuxième message ;
pendant l'affichage de l'interface utilisateur de messagerie, la réception (704), via le ou les dispositifs d'entrée, d'une entrée de sélection qui inclut une première portion et une deuxième portion ; et
pendant (706) la réception de l'entrée de sélection et avant la détection d'une fin de l'entrée de sélection :
en réponse (708) à la réception de la première portion de l'entrée de sélection, l'indication qu'une première portion du premier message sera sélectionnée lorsque la fin de l'entrée de sélection sera détectée ; et
en réponse (710) à la réception de la deuxième portion de l'entrée de sélection, dans lequel la deuxième portion de l'entrée de sélection inclut une entrée de mouvement vers un emplacement respectif dans l'interface utilisateur de messagerie :
conformément (712) à une détermination selon laquelle l'emplacement respectif dans l'interface utilisateur de messagerie correspond à une deuxième portion du premier message, l'indication que la première portion et la deuxième portion du premier message, mais pas une troisième portion du premier message, seront sélectionnées lorsque la fin de l'entrée de sélection sera détectée ;
**caractérisé en ce qu'**il comprend en outre :
conformément (714) à une détermination selon laquelle l'emplacement respectif dans l'interface utilisateur de messagerie correspond à une première portion du deuxième message, l'indication qu'une intégralité du deuxième message, la première portion du premier message, mais pas la troisième portion du premier message, seront sélectionnées lorsque la fin de l'entrée de sélection sera détectée ; et
conformément (716) à une détermination selon laquelle l'emplacement respectif dans l'interface utilisateur de messagerie correspond à une deuxième portion du deuxième message, différente de la première portion du deuxième message, l'indication que l'intégralité du deuxième message, la première portion du premier message, mais pas la troisième portion du premier message, seront sélectionnées lorsque la fin de l'entrée de sélection sera détectée.

2. Procédé selon la revendication 1, dans lequel la fin de l'entrée de sélection comprend un événement de décollage.

3. Procédé selon l'une quelconque des revendications 1 à 2, comprenant en outre :
la détection de la fin de l'entrée de sélection ; et
in response to detecting the end of the selection input:
conformément à la détermination selon laquelle l'emplacement respectif dans l'interface utilisateur de messagerie correspond à la deuxième portion du premier message, la sélection de la première portion et de la deuxième portion du premier message, mais pas de la troisième portion du premier message, pour une entrée ultérieure ;
conformément à la détermination selon laquelle l'emplacement respectif dans l'interface utilisateur de messagerie correspond à la première portion du deuxième message, la sélection de l'intégralité du deuxième message pour une entrée ultérieure ; et
conformément à la détermination selon laquelle l'emplacement respectif dans l'interface utilisateur de messagerie correspond à la deuxième portion du deuxième message, différente de la première portion du deuxième message, la sélection de l'intégralité du deuxième message pour une entrée ultérieure.

4. Procédé selon l'une quelconque des revendications 1 à 3, dans lequel :
la représentation du deuxième message inclut un élément d'interface utilisateur qui contient un contenu du deuxième message,
avant la réception de l'entrée de sélection, l'élément d'interface utilisateur est affiché avec une caractéristique visuelle ayant une première valeur, et
l'indication que l'intégralité du deuxième message sera sélectionnée lorsque la fin de l'entrée de sélection sera détectée inclut l'affichage de l'élément d'interface utilisateur avec la caractéristique visuelle ayant une seconde valeur, différente de la première valeur.

5. Procédé selon l'une quelconque des revendications 1 à 3, dans lequel :
la représentation du deuxième message inclut un élément d'interface utilisateur qui contient un contenu du deuxième message,
avant la réception de l'entrée de sélection, l'élément d'interface utilisateur est affiché avec une caractéristique visuelle ayant une première valeur, et le contenu du deuxième message est affiché sans indicateur de sélection, l'indicateur de sélection étant différent de l'élément d'interface utilisateur, et
l'indication que l'intégralité du deuxième message sera sélectionnée lorsque la fin de l'entrée de sélection sera détectée inclut :
le maintien de l'affichage de l'élément d'interface utilisateur avec la caractéristique visuelle ayant la première valeur ; et
l'affichage du contenu du deuxième message avec l'indicateur de sélection.

6. Procédé selon l'une quelconque des revendications 1 à 5, comprenant en outre :
en réponse à la réception de la deuxième portion de l'entrée de sélection :
conformément à la détermination selon laquelle l'emplacement respectif dans l'interface utilisateur de messagerie correspond à la première portion du deuxième message, l'indication que la première portion du premier message, mais pas une quatrième portion du premier message, sera sélectionnée lorsque la fin de l'entrée de sélection sera détectée ; et
conformément à la détermination selon laquelle l'emplacement respectif dans l'interface utilisateur de messagerie correspond à la deuxième portion du deuxième message, l'indication que la première portion du premier message, mais pas la quatrième portion du premier message, sera sélectionnée lorsque la fin de l'entrée de sélection sera détectée.

7. Procédé selon l'une quelconque des revendications 1 à 5, comprenant en outre :
en réponse à la réception de la deuxième portion de l'entrée de sélection :
conformément à la détermination selon laquelle l'emplacement respectif dans l'interface utilisateur de messagerie correspond à la première portion du deuxième message, l'indication qu'une intégralité, plus que la première portion, du premier message sera sélectionnée lorsque la fin de l'entrée de sélection sera détectée ; et
conformément à la détermination selon laquelle l'emplacement respectif dans l'interface utilisateur de messagerie correspond à la deuxième portion du deuxième message, l'indication que l'intégralité du premier message sera sélectionnée lorsque la fin de l'entrée de sélection sera détectée.

8. Procédé selon l'une quelconque des revendications 1 à 7, comprenant en outre :
pendant la réception de l'entrée de sélection et avant la détection de la fin de l'entrée de sélection :
après la réception de la première portion et de la deuxième portion de l'entrée de sélection, la réception d'une troisième portion de l'entrée de sélection, dans lequel la troisième portion de l'entrée de sélection inclut une entrée de mouvement vers un second emplacement respectif dans l'interface utilisateur de messagerie ;
et en réponse à la réception de la troisième portion de l'entrée de sélection :
conformément à une détermination selon laquelle le second emplacement respectif dans l'interface utilisateur de messagerie correspond à une quatrième portion du premier message, l'indication que la première portion et la quatrième portion du premier message, mais pas une cinquième portion du premier message, seront sélectionnées lorsque la fin de l'entrée de sélection sera détectée.

9. Procédé selon l'une quelconque des revendications 1 à 8, comprenant en outre :
tandis qu'une première portion d'un troisième message différent du premier message et différent du deuxième message est sélectionnée, la réception, via le ou les dispositifs d'entrée, d'une seconde entrée de sélection qui est associée à un second emplacement respectif dans l'interface utilisateur de messagerie, dans lequel la seconde entrée de sélection correspond à une requête de sélection d'une ou plusieurs portions additionnelles d'un ou plusieurs messages, et la seconde entrée de sélection n'inclut pas d'entrée de mouvement ; et
pendant la réception de la seconde entrée de sélection et avant la détection d'une fin de la seconde entrée de sélection :
conformément à une détermination selon laquelle le second emplacement respectif dans l'interface utilisateur de messagerie correspond à une deuxième portion du troisième message, l'indication que la première portion et la deuxième portion du troisième message, mais pas la troisième portion du troisième message, seront sélectionnées lorsque la fin de la seconde entrée de sélection sera détectée ;
conformément à une détermination selon laquelle le second emplacement respectif dans l'interface utilisateur de messagerie correspond à la première portion d'un quatrième message différent du premier message et différent du deuxième message, l'indication que l'intégralité du quatrième message sera sélectionnée lorsque la fin de la seconde entrée de sélection sera détectée ; et
conformément à une détermination selon laquelle le second emplacement respectif dans l'interface utilisateur de messagerie correspond à une deuxième portion du quatrième message, différente de la première portion du quatrième message, l'indication que l'intégralité du quatrième message sera sélectionnée lorsque la fin de la seconde entrée de sélection sera détectée.

10. Dispositif électronique, comprenant :
un ou plusieurs processeurs ;
une mémoire ; et
un ou plusieurs programmes, dans lequel le ou les programmes sont stockés dans la mémoire et configurés pour être exécutés par le ou les processeurs, le ou les programmes incluant des instructions pour effectuer l'un quelconque des procédés des revendications 1 à 9.

11. Support de stockage lisible par ordinateur non transitoire stockant un ou plusieurs programmes, le ou les programmes comprenant des instructions qui, lorsqu'elles sont exécutées par un ou plusieurs processeurs d'un dispositif électronique, amènent le dispositif électronique à effectuer l'un quelconque des procédés des revendications 1 à 9.
